# EUROPEAN PATENT SPECIFICATION

(11) **EP 4 412 260 B1**
(45) Date of publication and mention of the grant of the patent: **10.06.2026**
(21) Application number: 22874479.3
(22) Date of filing: 19.08.2022
(51) Int. Cl.: H04W 4/20, H04W 4/50, H04L 47/283

(54) **INFORMATION FEEDBACK METHOD AND APPARATUS, AND TERMINAL AND NETWORK DEVICE**
INFORMATIONSRÜCKKOPPLUNGSVERFAHREN UND -VORRICHTUNG SOWIE ENDGERÄT UND NETZWERKVORRICHTUNG
PROCÉDÉ ET APPAREIL DE RETOUR D'INFORMATION, TERMINAL ET PÉRIPHÉRIQUE DE RÉSEAU

(30) Priority: 30.09.2021 CN 202111160209
(43) Date of publication of application: 07.08.2024
(73) Proprietor: Datang Mobile Communications Equipment Co., Ltd., Beijing 100085 (CN)
(72) Inventor: ZHANG, Yinghao, Beijing 100085 (CN); CHENG, Fangchen, Beijing 100085 (CN); WANG, Jiaqing, Beijing 100085 (CN); YANG, Meiying, Beijing 100085 (CN); LUO, Chen, Beijing 100085 (CN); SU, Yuwan, Beijing 100085 (CN)
(74) Representative: Studio Torta S.p.A.
(86) International application number: PCT/CN2022/113674
(87) International publication number: WO 2023/051084

(56) References cited:
- WO-A1-2019/001391
- WO-A1-2021/188557
- CN-A- 112 106 325
- CN-A- 113 452 474
- US-A1- 2021 058 812
- CATT: "Views on Rel-18 XR", vol. TSG RAN, no. Electronic Meeting; 20210913 - 20210917, 6 September 2021 (2021-09-06), XP052049527, Retrieved from the Internet <URL:https://ftp.3gpp.org/tsg_ran/TSG_RAN/TSGR_93e/Docs/RP-212252.zip RP-212252.pdf> [retrieved on 20210906]
- CATT: "Evaluation results of XR performance", vol. RAN WG1, no. e-Meeting; 20210816 - 20210827, 7 August 2021 (2021-08-07), XP052038124, Retrieved from the Internet <URL:https://ftp.3gpp.org/tsg_ran/WG1_RL1/TSGR1_106-e/Docs/R1-2106951.zip R1-2106951.docx> [retrieved on 20210807]
- ERICSSON: "Discussion on enhancements for XR", 3GPP DRAFT; R1-2107631, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Online; 20210816 - 20210827, 6 August 2021 (2021-08-06), Mobile Competence Centre ; 650, route des Lucioles ; F-06921 Sophia-Antipolis Cedex ; France , XP052033600

## Description

### TECHNICAL FIELD

The present disclosure relates to the field of communication technology, in particular to an information feedback method, an information feedback device, a User Equipment (UE), and a network device.

### BACKGROUND

An eXtend Reality (XR) service is a periodic-like service, and it arrives randomly to some extent. The XR service has such characteristics as high throughput and low latency, and for such a critical service, a capacity supported by a New Radio (NR) system is an important issue that needs to be taken into consideration. It is impossible for a network side to obtain information related to an XR application at a UE (also called terminal) side. In the related art, in order to ensure the transmission of data packets in time, a base station needs to schedule the transmission of the data packets within a short time period. When a load for a cell increases, a difficulty in the scheduling by the base station increases too. At this time, it is probably impossible to transmit the XR data packets to the UE in time, and thereby the capacity is adversely affected.

CATT: "Views on Rel-18 XR", 3GPP DRAFT; RP-212252, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX ; FRANCE , vol. TSG RAN, no. Electronic Meeting; 20210913 -20210917 6 September 2021 (2021-09-06), XP052049527, relates to XR application indication primitive from application protocol to lower layer protocol. XR application is explicitly indicated to the low layer protocol, XR application preparation during session establishment XR-specific End-to-end bearer establishment, XR-specific radio bear indication, gNB scheduling acquisition of XR QoS parameters - averaged XR packet arrival rate and packet delay of each packet.

WO2019/001391A1 provides a radio resource scheduling method, a video terminal and an access network device, so that the access network device performs radio resource scheduling on the video terminal according to a video parameter reported by the video terminal, thereby ensuring video service experience of a video user. The method in an embodiment of the present application comprises: an access network device sends a parameter reporting configuration to a video terminal, the parameter reporting configuration allowing the video terminal to feed back a video parameter of a video service; the access network device receives the video parameter fed by the video terminal; and the access network device performs radio resource scheduling on the video terminal according to the video parameter.

US20210058812A1 provides methods, systems, and apparatus for communications are provided. In one aspect, a communication method including: determining, by a first communications apparatus, buffer latency information, and sending, by the first communica-tions apparatus, the buffer latency information. The buffer latency information is determined based on a buffer latency of one or more data packets. The buffer latency indicates one of a time interval between a time point at which a data packet arrives at an access stratum (AS) and a time point at which a corresponding buffer status report (BSR) is sent, or a time interval between a time point at which a data packet arrives at an AS and a time point at which a corresponding uplink grant is received.

CATT: "Evaluation results of XR performance", 3GPP DRAFT; R1-2106951, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. e-Meeting; 20210816 -20210827 7 August 2021 (2021-08-07), XP052038124, disclosed that in RAN1#104b-e meeting [l], most evaluation methodology and simulation assumption have been agreed. In RAN1#105-e meeting [2], the traffic parameters for XR base evaluation have been agreed. The traffic model and simulation assumptions for our simulation results can be found in Appendix. This paper provides the performance results of XR based on the agreed XR traffic model and evaluation methodology.

### SUMMARY

An object of the present disclosure is to provide an information feedback method, an information feedback device, a UE and a network device, so as to solve the problem in the related art where the XR capacity in the NR system is limited.

In one aspect, the present disclosure provides in some embodiments an information feedback method, including: determining, by a UE, XR-service-related information, the XR-service-related information including UE-playout-buffer-related information; and transmitting, by the UE, the XR-service-related information to a network device.

Optionally, the information feedback method further includes obtaining a feedback resource and a feedback condition for the XR-service-related information. The transmitting the XR-service-related information to the network device includes transmitting the XR-service-related information to the network device through the feedback resource in accordance with the feedback condition.

Optionally, the determining the XR-service-related information includes determining the XR-service-related information in accordance with statistics of historical data, or determining the XR-service-related information through prediction using a target model.

Optionally, the XR-service-related information includes at least one of an uplink service model parameter or an uplink service Quality of Service (QoS) parameter.

Optionally, the UE-playout-buffer-related information includes at least one of an absolute value of a size of a playout buffer, a change in the size of the playout buffer, or a statistical average value of delays of data packets arriving at the UE.

Optionally, the uplink service model parameter includes at least one of an average value of sizes of data packets, a variance of the sizes of the data packets, a maximum value of the sizes of the data packets, a minimum value of the sizes of the data packets, an arrival period of the data packets, an average value of uplink network jitter delays, or a variance of the uplink network jitter delays.

Optionally, the uplink service QoS parameter includes at least one of an uplink service data packet delay budget, or uplink service data packet reliability.

Optionally, the obtaining the feedback resource for the XR-service-related information includes: determining the feedback resource in accordance with a protocol; or obtaining the feedback resource configured by the network device.

Optionally, the obtaining the feedback resource configured by the network device includes: transmitting resource configuration request information to the network device, and receiving first indication signaling transmitted by the network device in accordance with the resource configuration request information, the first indication signaling indicating the feedback resource; or receiving the feedback resource preconfigured by the network device through high-layer signaling.

Optionally, the feedback resource includes at least one of a period of feedback, a time offset of feedback, or a frequency-domain resource of feedback.

Optionally, the transmitting the XR-service-related information to the network device through the feedback resource includes: determining a time-domain position of a feedback occasion within each period of feedback in accordance with the period of feedback and the time offset of feedback, and transmitting the XR-service-related information on the feedback occasion in accordance with the time-domain position; and/or determining a feedback frequency-domain position of the XR-service-related information in accordance with the frequency-domain resource of feedback, and transmitting the XR-service-related information at the feedback frequency-domain position.

Optionally, the obtaining the feedback condition for the XR-service-related information includes: determining that the feedback condition is that a feedback is based on a feedback event triggering; or obtaining the feedback condition configured by the network device.

Optionally, the obtaining the feedback condition configured by the network device includes receiving feedback configuration information and/or second indication signaling transmitted by the network device, wherein the feedback configuration information includes the feedback event triggering, and the second indication signaling includes feedback indication signaling or no-feedback indication signaling.

Optionally, the second indication signaling includes layer-1 signaling or a Medium Access Control Control Element (MAC CE).

Optionally, the transmitting the XR-service-related information to the network device through the feedback resource in accordance with the feedback condition includes, when it detects the feedback event triggering and a duration of the feedback event triggering reaches a first duration, transmitting the XR-service-related information on a next feedback occasion of a current time point.

Optionally, the transmitting the XR-service-related information to the network device through the feedback resource includes at least one of: when Radio Resource Control (RRC) connection is established or reestablished, transmitting a Physical Uplink Shared Channel (PUSCH) through the feedback resource, the PUSCH carrying the XR-service-related information; transmitting an MAC CE through the feedback resource, the MAC CE carrying the XR-service-related information; or transmitting a Physical Uplink Control Channel (PUCCH) through the feedback resource, the PUCCH carrying Uplink Control Information (UCI) including the XR-service-related information.

Optionally, a bit field of the PUSCH includes a service indication field and an XR-service-related information field.

Optionally, a bit field of the MAC CE includes a service indication field and an XR-service-related information field.

Optionally, a bit field of the UCI includes a service indication field and an XR-service-related information field.

In another aspect, the present disclosure provides in some embodiments an information feedback method, including receiving, by a network device, XR-service-related information transmitted by a UE. The XR-service-related information includes UE-playout-buffer-related information.

Optionally, the information feedback method further includes performing scheduling optimization and/or resource allocation optimization in accordance with the XR-service-related information.

Optionally, the receiving the XR-service-related information transmitted by the UE includes receiving the XR-service-related information transmitted by the UE through a feedback resource in accordance with a feedback condition.

Optionally, the XR-service-related information includes at least one of an uplink service model parameter or an uplink service QoS parameter.

Optionally, the UE-playout-buffer-related information includes at least one of an absolute value of a size of a playout buffer, a change in the size of the playout buffer, or a statistical average value of delays of data packets arriving at the UE.

Optionally, the uplink service model parameter includes at least one of an average value of sizes of data packets, a variance of the sizes of the data packets, a maximum value of the sizes of the data packets, a minimum value of the sizes of the data packets, an arrival period of the data packets, an average value of uplink network jitter delays, or a variance of the uplink network jitter delays.

Optionally, the information feedback method further includes determining at least one of the following information in accordance with the uplink service model parameter: the size of the data packet, an arrival time of the data packet, or an uplink network jitter delay.

Optionally, the uplink service QoS parameter includes at least one of an uplink service data packet delay budget, or uplink service data packet reliability.

Optionally, the information feedback method further includes configuring for the UE the feedback resource and/or feedback condition for the XR-service-related information.

Optionally, the configuring for the UE the feedback resource for the XR service-related information includes: receiving resource configuration request information transmitted by the UE, and transmitting first indication signaling to the UE in accordance with the resource configuration request information, the first indication signaling indicating the feedback resource; or transmitting a preconfigured feedback resource to the UE through high-layer signaling.

Optionally, the feedback resource includes at least one of a period of feedback, a time offset of feedback, or a frequency-domain resource of feedback.

Optionally, the configuring for the UE the feedback condition for the XR-service-related information includes transmitting feedback configuration information and/or second indication signaling to the UE, wherein the feedback configuration information includes a feedback event triggering, and the second indication signaling includes feedback indication signaling or no-feedback indication signaling.

Optionally, the second indication signaling includes layer-1 signaling or an MAC CE.

Optionally, the receiving the XR-service-related information transmitted by the UE through the feedback resource in accordance with the feedback condition includes at least one of: receiving a PUSCH transmitted by the UE through the feedback resource when RRC connection is established or reestablished, the PUSCH carrying the XR-service-related information; receiving an MAC CE transmitted by the UE through the feedback resource, the MAC CE carrying the XR-service-related information; or receiving a PUCCH transmitted by the UE through the feedback resource, the PUCCH carrying UCI including the XR-service-related information.

Optionally, a bit field of the PUSCH includes a service indication field and an XR-service-related information field.

Optionally, a bit field of the MAC CE includes a service indication field and an XR-service-related information field.

Optionally, a bit field of the UCI includes a service indication field and an XR-service-related information field.

In yet another aspect, the present disclosure provides in some embodiments a UE, including a memory, a transceiver and a processor. The memory is configured to store therein a computer program, the transceiver is configured to receive and transmit data under the control of the processor, the processor is configured to read the computer program in the memory so as to determine XR-service-related information, the XR-service-related information includes UE-playout-buffer-related information, and the transceiver is configured to transmit the XR-service-related information to a network device.

Optionally, the processor is configured to read the computer program in the memory so as to obtain a feedback resource and a feedback condition for the XR-service-related information, and the transceiver is configured to transmit the XR-service-related information to the network device through the feedback resource in accordance with the feedback condition.

Optionally, the processor is configured to read the computer program in the memory, so as to: determine the XR-service-related information in accordance with statistics of historical data, or determine the XR-service-related information through prediction using a target model.

Optionally, the XR-service-related information includes at least one of an uplink service model parameter or an uplink service QoS parameter.

Optionally, the UE-playout-buffer-related information includes at least one of an absolute value of a size of a playout buffer, a change in the size of the playout buffer, or a statistical average value of delays of data packets arriving at the UE.

Optionally, the uplink service model parameter includes at least one of an average value of sizes of data packets, a variance of the sizes of the data packets, a maximum value of the sizes of the data packets, a minimum value of the sizes of the data packets, an arrival period of the data packets, an average value of uplink network jitter delays, or a variance of the uplink network jitter delays.

Optionally, the uplink service QoS parameter includes at least one of an uplink service data packet delay budget, or uplink service data packet reliability.

Optionally, the processor is configured to read the computer program in the memory, so as to: determine the feedback resource in accordance with a protocol; or obtain the feedback resource configured by the network device.

Optionally, the processor is configured to read the computer program in the memory, so as to: transmit resource configuration request information to the network device, and receive first indication signaling transmitted by the network device in accordance with the resource configuration request information, the first indication signaling indicating the feedback resource; or receive the feedback resource preconfigured by the network device through high-layer signaling.

Optionally, the feedback resource includes at least one of a period of feedback, a time offset of feedback, or a frequency-domain resource of feedback.

Optionally, the processor is configured to read the computer program in the memory, so as to: determine a time-domain position of a feedback occasion within each period of feedback in accordance with the period of feedback and the time offset of feedback, and transmit the XR-service-related information in the feedback occasion in accordance with the time-domain position; and/or determine a feedback frequency-domain position of the XR-service-related information in accordance with the frequency-domain resource of feedback, and transmit the XR-service-related information at the feedback frequency-domain position.

Optionally, the processor is configured to read the computer program in the memory, so as to: determine that the feedback condition is that a feedback is based on a feedback event triggering; or obtain the feedback condition configured by the network device.

Optionally, the transceiver is configured to receive feedback configuration information and/or second indication signaling transmitted by the network device, wherein the feedback configuration information includes the feedback event triggering, and the second indication signaling includes feedback indication signaling or no-feedback indication signaling.

Optionally, the second indication signaling includes layer-1 signaling or an MAC CE.

Optionally, the transceiver is configured to, when it detects the feedback event triggering and a duration of the feedback event triggering reaches a first duration, transmit the XR-service-related information on a next feedback occasion of a current time point.

Optionally, the transceiver is configured to perform at least one of: when RRC connection is established or reestablished, transmitting a PUSCH through the feedback resource, the PUSCH carrying the XR-service-related information; transmitting an MAC CE through the feedback resource, the MAC CE carrying the XR-service-related information; or transmitting a PUCCH through the feedback resource, the PUCCH carrying UCI including the XR-service-related information.

Optionally, a bit field of the PUSCH includes a service indication field and an XR-service-related information field.

Optionally, a bit field of the MAC CE includes a service indication field and an XR-service-related information field.

Optionally, a bit field of the UCI includes a service indication field and an XR-service-related information field.

In still yet another aspect, the present disclosure provides in some embodiments a network device, including a memory, a transceiver and a processor. The memory is configured to store therein a computer program, the processor is configured to read the computer program in the memory, the transceiver is configured to receive and transmit data under the control of the processor so as to receive XR-service-related information transmitted by a UE, wherein the XR-service-related information includes UE-playout-buffer-related information.

Optionally, the processor is configured to read the computer program in the memory so as to perform scheduling optimization and/or resource allocation optimization in accordance with the XR-service-related information.

Optionally, the transceiver is configured to receive the XR-service-related information transmitted by the UE through a feedback resource in accordance with a feedback condition.

Optionally, the XR-service-related information includes at least one of an uplink service model parameter or an uplink service QoS parameter.

Optionally, the UE-playout-buffer-related information includes at least one of an absolute value of a size of a playout buffer, a change in the size of the playout buffer, or a statistical average value of delays of data packets arriving at the UE.

Optionally, the uplink service model parameter includes at least one of an average value of sizes of data packets, a variance of the sizes of the data packets, a maximum value of the sizes of the data packets, a minimum value of the sizes of the data packets, an arrival period of the data packets, an average value of uplink network jitter delays, or a variance of the uplink network jitter delays.

Optionally, the processor is configured to read the computer program in the memory, so as to determine at least one of the following information in accordance with the uplink service model parameter: the size of the data packet, an arrival time of the data packet, or an uplink network jitter delay.

Optionally, the uplink service QoS parameter includes at least one of an uplink service data packet delay budget, or uplink service data packet reliability.

Optionally, the processor is configured to read the computer program in the memory, so as to configure for the UE the feedback resource and/or feedback condition for the XR-service-related information.

Optionally, the transceiver is configured to: receive resource configuration request information transmitted by the UE, and transmit first indication signaling to the UE in accordance with the resource configuration request information, the first indication signaling indicating the feedback resource; or transmit a preconfigured feedback resource to the UE through high-layer signaling.

Optionally, the feedback resource includes at least one of a period of feedback, a time offset of feedback, or a frequency-domain resource of feedback.

Optionally, the transceiver is configured to transmit feedback configuration information and/or second indication signaling to the UE, wherein the feedback configuration information includes a feedback event triggering, and the second indication signaling includes feedback indication signaling or no-feedback indication signaling.

Optionally, the second indication signaling includes layer-1 signaling or an MAC CE.

Optionally, when the transceiver receiving the XR-service-related information transmitted by the UE through the feedback resource in accordance with the feedback condition, the transceiver is configured to perform at least one of: receiving a PUSCH transmitted by the UE through the feedback resource when RRC connection is established or reestablished, the PUSCH carrying the XR-service-related information; receiving an MAC CE transmitted by the UE through the feedback resource, the MAC CE carrying the XR-service-related information; or receiving a PUCCH transmitted by the UE through the feedback resource, the PUCCH carrying UCI including the XR-service-related information.

Optionally, a bit field of the PUSCH includes a service indication field and an XR-service-related information field.

Optionally, a bit field of the MAC CE includes a service indication field and an XR-service-related information field.

Optionally, a bit field of the UCI includes a service indication field and an XR-service-related information field.

In still yet another aspect, the present disclosure provides in some embodiments an information feedback device, including: a first determination unit configured to determine XR-service-related information, the XR-service-related information including UE-playout-buffer-related information; and a first transmission unit configured to transmit the XR-service-related information to a network device.

In still yet another aspect, the present disclosure provides in some embodiments an information feedback device, including a first reception unit configured to receive XR-service-related information transmitted by a UE. The XR-service-related information includes UE-playout-buffer-related information.

In still yet another aspect, the present disclosure provides in some embodiments a processor-readable storage medium storing therein a computer program. The computer program is used to be executed by a processor so as to implement the steps of the above-mentioned information feedback method.

The present disclosure has the following beneficial effects.

According to the embodiments of the present disclosure, the UE determines the XR-service-related information, and the XR-service-related information includes the UE-playout-buffer-related information. Then, the UE reports the XR-service-related information to the network device. Upon the receipt of the XR-service-related information, the network device performs the scheduling optimization in accordance with the XR-service-related information. As a result, it is able to increase the XR capacity.

### BRIEF DESCRIPTION OF THE DRAWINGS

Fig. 1 is a schematic view showing a situation where data frames are cached in playout buffers;
Fig. 2 is a flow chart of an information feedback method according to an embodiment of the present disclosure;
Fig. 3 is a schematic view showing a bit field of an MAC CE or a PUCCH carrying XR-service-related information according to an embodiment of the present disclosure;
Fig. 4 is another flow chart of the information feedback method according to an embodiment of the present disclosure;
Fig. 5 is a schematic view showing an information feedback device according to an embodiment of the present disclosure;
Fig. 6 is another schematic view showing the information feedback device according to an embodiment of the present disclosure;
Fig. 7 is a schematic view showing a UE according to an embodiment of the present disclosure; and
Fig. 8 is a schematic view showing a network device according to an embodiment of the present disclosure.

### DETAILED DESCRIPTION

In order to make the objects, the technical solutions and the advantages of the present disclosure more apparent, the present disclosure will be described hereinafter in details in conjunction with the drawings and embodiments. In the following description, specific details of configurations and assemblies are merely provided to facilitate the understanding of the present disclosure. It should be appreciated that, a person skilled in the art may make further modifications and alternations without departing from the the scope of the present disclosure. In addition, for clarification, any known function and structure will not be described hereinafter.

It should be further appreciated that, such phrases as "one embodiment" and "one of the embodiments" intend to indicate that the features, structures or characteristics are contained in at least an embodiment of the present disclosure, rather than referring to a same embodiment. In addition, the features, structures or characteristics may be combined in any embodiment or embodiments in an appropriate manner.

It should be appreciated that, the following serial numbers do not refer to the order of the steps. Actually, the order shall be determined in accordance with functions and internal logic of the steps, but shall not be construed as limiting the implementation in any form.

The expression "and/or" is merely used to describe the relationship between objects, and it includes three relationships. For example, "A and/or B" may represent that, there is only A, there are both A and B, and there is only B. Further, the symbol "/" usually refers to "or".

The expression "a plurality of" refers to two or more, and the other quantifiers are similar.

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

At first, some concepts involved in the embodiments of the present disclosure will be described hereinafter.

### Playout buffer

Due to the existence of network jitter, XR video data packets generated periodically by a source end arrives at a UE in a delayed manner, so a video is played by the UE discontinuously, or even interrupted. Through a playout buffer, several XR data packets are stored by the UE before the playing so as to absorb the jitter experienced by the data packets, thereby to compensate for a change in the network delay.

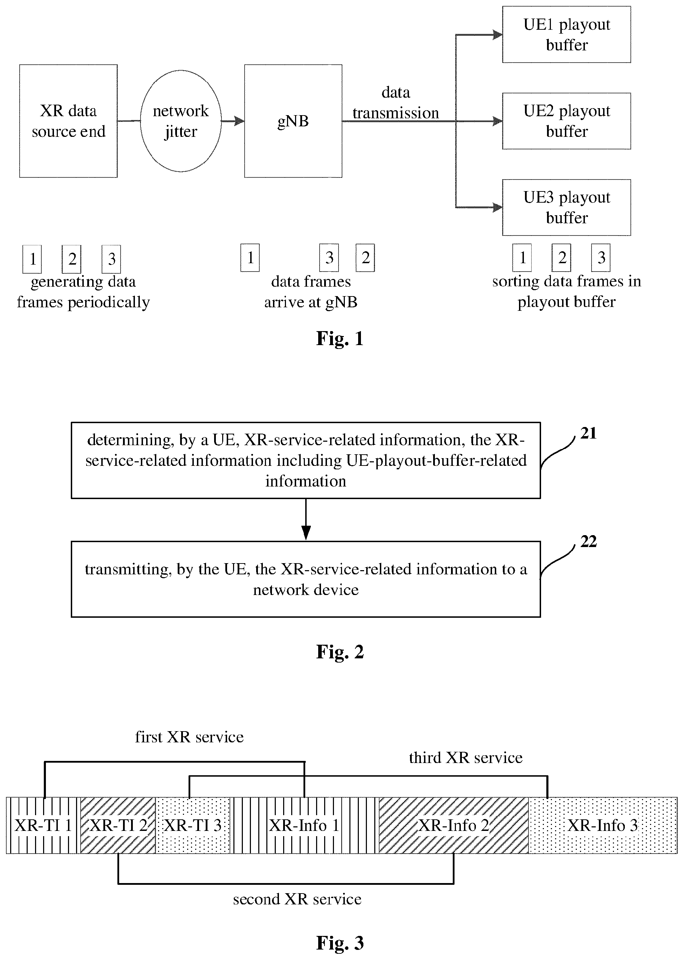

As shown in Fig. 1, the UE playout buffer is a buffer at a UE side for caching data frames before the playing, so as to absorb the network transmission delay. The cached data frames are sorted and played by the UE periodically, so as to ensure the normal playing of the data at the UE side. The XR data source end generates XR video frames at a period of 16.67ms, and due to the influence of the network jitter on the transmission of the video frames, the video frames arrive at the UE at irregular time intervals, so a disorder of the video frames may occur. The video frames are cached in the playout buffer by the UE, and sorted by the UE in a generation order at the source end, and then the UE plays the video frames within the period generated at the source end, so as to ensure that the video is played properly by the UE.

In an NR system, the UE transmits information to a gNB through an uplink physical channels. As speculated in an NR protocol, the uplink physical channels include a Physical Random Access Channel (PRACH) for initial random access, a Physical Uplink Control Channel (PUCCH) for transmitting Uplink Control Information (UCI), and a Physical Uplink Shared Channel (PUSCH) for transmitting uplink data information.

The RPACH is used for a random access procedure, and configured to transmit a random access preamble sequence.

The PUCCH carries the UCI, feeds back Hybrid Automatic Repeat reQuest acknowledgement (HARQ-ACK) information, indicates whether or not a downlink transmission block has been received correctly, reports Channel State Information (CSI), and requests an uplink resource in the case that uplink data arrives.

The PUSCH is used to transmit uplink service data, and carry the UCI.

An object of the present disclosure is to provide an information feedback method, so as to solve the problem in the related art where the XR capacity is limited.

As shown in Fig. 2, the present disclosure provides in some embodiments an information feedback method, which includes the following steps.

Step 21: determining, by a UE, XR-service-related information, the XR-service-related information including UE-playout-buffer-related information.

Optionally, the determining the XR-service-related information includes: determining the XR-service-related information in accordance with statistics of historical data; or determining the XR-service-related information through prediction using a target model. When the XR-service-related information is determined in accordance with the statistics of historical data, the XR-service-related information is obtained through counting the statistics of historical data within a long time period or a short time period. When the XR-service-related information is predicted using the target model, the target model is an Artificial Intelligence (AI) model, i.e., the UE predicts the playout-buffer-related information in accordance with the AI model.

The XR-service-related information includes the UE-playout-buffer-related information. Optionally, the UE adaptively adjusts a size of a playout buffer in accordance with the determined XR-service-related information (e.g., the UE playout buffer). To be specific, XR data frames are cached in the UE playout buffer, so as to absorb a network jitter delay. However, the jitter delay is variable. In order to effectively prevent the influence caused by the jitter, the size of the playout buffer should match the jitter, i.e., it is necessary to adaptively adjust the size of the playout buffer.

The UE may adjust the size of the playout buffer in accordance with prediction information generated by the AI model. The prediction information is information which is predicted by the UE in accordance with the AI model and which affects the size of the playout buffer, and it includes an absolute value of the size of the playout buffer, or a change in the size of the playout buffer, or a predicted jitter delay value. The UE adaptively adjusts the size of the playout buffer in accordance with the prediction information.

Step 22: transmitting, by the UE, the XR-service-related information to a network device.

After determining the XR-service-related information, the UE reports the XR-service-related information to the network device. Upon the receipt of the XR-service-related information, the network device performs scheduling optimization and resource allocation optimization in accordance with the XR-service-related information.

In the embodiments of the present disclosure, the UE transmits the XR-service-related information to the network device, and the network device performs the scheduling optimization in accordance with the XR-service-related information, so as to increase the XR capacity. When the network device, e.g., a gNB, knows the size of the UE playout buffer, the gNB may have an additional Packet Delay Budget (PDB), and thus the gNB is provided with more time to schedule the UE, so it is able to increase the XR capacity. In the embodiments of the present disclosure, the XR capacity refers to the quantity of UEs supporting an XR service in a cell. In a possible embodiment of the present disclosure, the XR capacity is defined as a maximum quantity of UEs in the cell when the quantity of UEs in the cell meeting a requirement is greater than a predetermined value (e.g., 90%). The UE meeting the requirement refers to a UE for which X% (e.g., 99%) of the data packets are transmitted successfully within the PDB. When the gNB knows the size of the UE playout buffer, it is able to relax the requirement on the PDB, and based on the definition on the XR capacity, it is also able to improve the XR capacity.

Optionally, after obtaining the XR-service-related information, the network device also optimizes a parameter configuration for the UE in accordance with the XR-service-related information. For example, the UE transmits the XR-service-related information, e.g., the size of the UE playout buffer, to the gNB, so that the gNB knows the size of the UE playout buffer. At this time, even if the arrival of the data packet is not aligned with a Discontinuous Reception (DRX) on duration, the data packet may also be transmitted within a next DRX cycle. Hence, the network device may configure a short on duration timer, so as to increase a power-saving gain.

According to the embodiments of the present disclosure, the UE determines the XR-service-related information, and reports the XR-service-related information to the network device. After obtaining the XR-service-related information, the network device performs the scheduling optimization in accordance with the XR-service-related information, so as to increase the XR capacity.

The XR-service-related information includes the following information.
(1) UE-playout-buffer-related information, which includes at least one of: an absolute value of the size of the playout buffer (the network device directly obtains the size of the UE playout buffer in accordance with the absolute value); a change in the size of the playout buffer (the network device indirectly obtains the size of the UE playout buffer at a current time point in accordance with the size of the UE playout buffer obtained at a previous feedback time point and a feedback change vale at the current time point); or a statistical average value of delays of data packets arriving at the UE (the statistical average value J of delays of data packets arriving at the UE is strongly related to the size of the playout buffer, i.e., the larger the value of J, the network device considers the larger the UE playout buffer, vice versa).
   The XR-service-related information further includes at least one of the followings.
(2) Uplink service model parameter. The uplink service model parameter is capable of reflecting an arrival time of the data packet for the uplink service and a probability distribution characteristic of a size of the data packet. The network device determines the size of the data packet, the arrival time of the data packet and an uplink network jitter delay in accordance with the uplink service model parameter.
   Optionally, the uplink service model parameter includes at least one of an average value of sizes of data packets, a variance of the sizes of the data packets, a maximum value of the sizes of the data packets, a minimum value of the sizes of the data packets, an arrival period of the data packets, an average value of uplink network jitter delays, or a variance of the uplink network jitter delays.
(3) Uplink service QoS parameter. The uplink service QoS parameter includes at least one of an uplink service data packet delay budget, or uplink service data packet reliability.

In the embodiments of the present disclosure, the UE reports the XR-service-related information to the network device, and several XR video frames are stored in the playout buffer. A 60fps XR video frame has a period of 16.67ms, i.e., the absolute value of the size of the playout buffer is dozens, or even hundreds, of milliseconds, so usually the change value in the size of the playout buffer is smaller. The UE transmits the change value in the size of the playout buffer to the network device, so it is able to reduce a part of a payload overhead.

For an XR service having a high throughput and a low latency, the UE transmits the XR-service-related information to the network device, so as to support the network device to perform the scheduling optimization on the UE. When the network device knows the size of the UE playout buffer, the network device is provided with an additional PDB, so the network device is provided with more time to schedule the UE, so as to increase the XR capacity. In addition, when the network device knows the size of the UE playout buffer, it is able to relax the requirement on the PDB, thereby to improve the XR capacity. Moreover, through obtaining the uplink service model parameter, the network device calculates the size of the data packet and the arrival time of the data packet in accordance with the probability, so as to allocate resources for the uplink service transmission, e.g., reserved resources for configured grant transmission. Through the reserved resources matching the service, it is able to increase the capacity.

In a possible embodiment of the present disclosure, the method further includes obtaining a feedback resource and a feedback condition for the XR-service-related information. The transmitting the XR-service-related information to the network device includes transmitting the XR-service-related information to the network device through the feedback resource in accordance with the feedback condition.

In the embodiments of the present disclosure, the feedback resource refers to a resource for transmitting, by the UE, the XR-service-related information to the network device, and the feedback condition refers to a condition for transmitting, by the UE, the XR-service-related information. The feedback condition may be determined by the UE, or configured by the network device. The feedback resource is agreed in a protocol, or configured by the network device. When the UE meets the feedback condition, it transmits the XR-service-related information at a position corresponding to the feedback resource.

Further, the transmitting the XR-service-related information to the network device through the feedback resource includes at least one of the followings.
(1) When RRC connection is established or reestablished, transmitting a PUSCH through the feedback resource, the PUSCH carrying the XR-service-related information.
   Optionally, a bit field of the PUSCH includes a service indication field and an XR-service-related information field. The service indication field is used to indicate information about an XR service or XR services which are carried, and the XR-service-related information field is used to carry the XR-service-related information.
(2) Transmitting an MAC CE through the feedback resource, the MAC CE carrying the XR-service-related information.

Optionally, a bit field of the MAC CE includes a service indication field and an XR-service-related information field.

In the embodiments of the present disclosure, the MAC CE carries the XR-service-related information, and the UE transmits the MAC CE carrying the XR-service-related information through the feedback resource. The MAC CE includes two kinds of bit fields, i.e., the service indication field XR-TI and the XR-service-related information field XR-Info. The service indication field is used to indicate information about an XR service or XR services which are carried, and the XR-service-related information field is used to carry the XR-service-related information.

(3) Transmitting a PUCCH through the feedback resource, the PUCCH carrying UCI including the XR-service-related information.

Optionally, a bit field of the UCI includes a service indication field and an XR-service-related information field.

The PUCCH carries the XR-service-related information, and the UE transmits the PUCCH carrying the UCI including the XR-service-related information through the feedback resource. The UCI includes two kinds of bit fields, i.e., the service indication field XR-TI and the XR-service-related information field XR-Info. The service indication field is used to indicate information about an XR service or XR services which are carried, and the XR-service-related information field is used to carry the XR-service-related information.

In the embodiments of the present disclosure, the XR-service-related information is fed back to the network device through the PUSCH, or through the MAC CE or the PUCCH.

The implementation of obtaining the feedback resource and the feedback condition will be described hereinafter.

Optionally, the obtaining the feedback resource for the XR-service-related information includes one of the following two modes.

First mode: determining the feedback resource in accordance with a protocol. In this mode, the feedback resource for the XR-service-related information is agreed in the protocol.

Second mode: obtaining the feedback resource configured by the network device. The network device directly configures the feedback resource for the UE, i.e., it directly configures a feedback position for transmitting the XR-service-related information for the UE. Alternatively, the network device indicates a time-domain position and a frequency-domain position for the XR-service-related information to the UE through predetermined indication signaling or signal.

To be specific, in the second mode, the obtaining the feedback resource configured by the network device includes: transmitting resource configuration request information to the network device, and receiving first indication signaling transmitted by the network device in accordance with the resource configuration request information, the first indication signaling indicating the feedback resource; or receiving the feedback resource preconfigured by the network device through high-layer signaling.

In the embodiments of the present disclosure, the feedback resource may be a specific feedback position, i.e., the network device directly configures the specific feedback position at which the XR-service-related information is transmitted for the UE. The UE requests the network device to configure the feedback resource, or the feedback resource is preconfigured by the network device through high-layer signaling. When the UE requests the network device to configure the feedback resource, it transmits a first signal/channel to the network device, so as to request the network device to transmit the resource for the XR-service-related information. Upon the receipt of the request, the network device transmits a second signal/channel for indicating the feedback resource to the UE. The UE transmits the MAC CE or PUCCH carrying the XR-service-related information through the feedback resource, and the network device receives the MAC CE or PUCCH so as to obtain the XR-service-related information.

The feedback resource includes at least one of a period of feedback, a time offset of feedback, or a frequency-domain resource of feedback.

Optionally, the transmitting the XR-service-related information to the network device through the feedback resource includes: determining a time-domain position of a feedback occasion within each period of feedback in accordance with the period of feedback and the time offset of feedback, and transmitting the XR-service-related information on the feedback occasion in accordance with the time-domain position; and/or determining a feedback frequency-domain position of the XR-service-related information in accordance with the frequency-domain resource of feedback, and transmitting the XR-service-related information at the feedback frequency-domain position.

In the embodiments of the present disclosure, the feedback resource includes one or more of the period of feedback, the time offset of feedback or the frequency-domain resource of feedback. The UE calculates the time-domain position of the feedback occasion within each period in accordance with the period of feedback and the time offset of feedback, and transmits the XR-service-related information on the feedback occasion. The UE transmits the XR-service-related information to the network device periodically in accordance with the period of feedback. The UE determines the feedback frequency-domain position in accordance with the frequency-domain resource of feedback, and transmits the XR-service-related information at the corresponding feedback frequency-domain position. Optionally, the UE determines the time-domain position of the feedback occasion and the feedback frequency-domain position for the XR-service-related information, so as to determine the specific feedback position of the UE.

It should be appreciated that, when the UE requests the feedback resource from the network device, the network device may transmit an indication signal to the UE, so as to directly indicate the feedback position. In other words, the UE requests the feedback resource from the network device if necessary, and the network device transmits the indication information to indicate the specific time-domain position and the specific frequency-domain position at which the feedback is performed by the UE. In this way, it is able to obtain the feedback resource without calculation in accordance with the period of feedback and the time offset of feedback.

Optionally, the obtaining the feedback condition for the XR-service-related information includes: determining that the feedback condition is that a feedback is based on a feedback event triggering; or obtaining the feedback condition configured by the network device.

In the embodiments of the present disclosure, the feedback condition includes that the feedback is determined by the UE according to the feedback event triggering, and the feedback event is determined by the UE. To be specific, the UE determines the feedback event triggering, and when the UE detects the feedback event triggering, it feeds back the XR-service-related information to the network device through the feedback resource.

In the embodiments of the present disclosure, the feedback condition may also be configured by the network device. To be specific, the obtaining the feedback condition configured by the network device includes receiving feedback configuration information and/or second indication signaling transmitted by the network device, the feedback configuration information includes the feedback event triggering, and the second indication signaling includes feedback indication signaling or no-feedback indication signaling.

In the embodiments of the present disclosure, when the feedback condition is configured by the network device, the feedback configuration information and/or the indication signaling are configured by the network device. The feedback configuration information includes the feedback event triggering. The UE receives the feedback event, and when the UE detects that the feedback event has been triggered, it transmits the XR-service-related information to the network device through the feedback resource. The network device transmits the second indication signaling so as to dynamically indicate whether or not the feedback is to be performed by the UE. Optionally, the second indication signaling includes layer-1 signaling or an MAC CE.

The second indication signaling configured by the network device includes the feedback indication signaling or no-feedback indication signaling. The feedback indication signaling is used to indicate the UE to transmit the XR-service-related information, and the no-feedback indication signaling is used to indicate the UE not to transmit the XR-service-related information. To be specific, the network device determines to trigger to indicate the UE of the feedback event, and transmits a signal/channel to indicate the UE to feed back the XR-service-related information in accordance with the feedback event triggering. The UE or the network device determines a position of the feedback resource in accordance with the signal/channel, or determines the position of the feedback resource through the protocol. Upon the receipt of the indication from the network device, the UE feeds back the XR-service-related information at the position of the feedback resource. The XR-service-related information is carried on the MAC CE or PUCCH.

Alternatively, the network device determines that a no-feedback event is triggered, and transmits a signal/channel to indicate the UE not to feed back the XR-service-related information. Upon the receipt of the signal/channel, the UE does not feed back the XR-service-related information.

Optionally, the transmitting the XR-service-related information to the network device through the feedback resource in accordance with the feedback condition includes, when it detects the feedback event triggering and a duration of the feedback event triggering reaches a first duration, transmitting the XR-service-related information on a next feedback occasion of a current time point.

The first duration may be set according to the practical need. When the UE detects that the feedback event is triggered for a certain time period, the UE feeds back the XR-service-related information on a next available uplink transmission occasion. It should be appreciated that, when the UE detects that the feedback event configured by the network device is triggered for a certain time period, the UE does not need to wait for a next period of feedback, and instead, it directly transmits the XR-service-related information to the base station on the next available uplink transmission occasion.

When the feedback condition includes that the feedback event is triggered and whether to trigger the feedback event is determined by the UE, to be specific, the UE determines that the feedback event is to be triggered, and determines a position of a resource for transmitting the XR-service-related information in accordance with the protocol or determines the position of the feedback resource in accordance with configuration from the network device. When the UE detects that the feedback event is triggered, it feeds back the XR-service-related information to the network device through the feedback resource. For example, as agreed in the protocol, the XR-service-related information is carried in the MAC CE of the PUSCH carrying uplink data. When the UE detects that the playing of XR data frames is interrupted for a certain time period, it feeds back the size of the playout buffer to the network device on the MAC CE of the next PUSCH carrying the uplink data.

In the embodiments of the present disclosure, the UE determines the period feedback occasion in accordance with the period of feedback and the time offset of feedback and periodically feeds back the XR-service-related information, and/or feeds back the XR-service-related information in accordance with the triggered feedback event. For example, the feedback event is triggered when the XR data frames played by the UE are interrupted for a certain time period, the XR-service-related information is carried on the MAC CE or PUCCH.

In the embodiments of the present disclosure, several methods for obtaining, by the UE, the feedback resource and the feedback condition for the XR-service-related information and methods for transmitting by the UE the XR-service-related information to the network device have been described hereinabove. A specific implementation process will be described hereinafter by taking different obtaining or transmitting modes as an example.

In a possible embodiment of the present disclosure, the UE requests the network device for the feedback resource.

To be specific, the network device is a base station. The XR-service-related information is information which is available for the UE and related to the XR service, and based on which the network device performs the scheduling optimization or resource allocation, e.g., the playout-buffer-related information used by the UE for caching XR service data frames before the playing of the XR service, the uplink service model parameter and the uplink service QoS parameter. The implementation process includes the following steps.

Step 1: a signal for requesting the feedback resource for the XR-service-related information, i.e., a first signal, is introduced, and the UE transmits the first signal to the base station so as to request for time-domain and/or frequency-domain resources for transmitting the XR-service-related information.

Step 2: upon the receipt of the first signal, the base station transmits a second signal, so as to indicate the time-domain and/or frequency-domain resources for transmitting the XR-service-related information, i.e., the feedback resource, to the UE. A specific indication about the feedback resource is carried in the second signal, or a relationship between the feedback resource and a transmission resource for the second signal is agreed in the protocol and then the feedback resource is obtained through calculation. For example, a feedback time-domain resource is an n^{th} slot after a time-domain resource for transmitting the second signal, and a frequency-domain resource of feedback is the same as a frequency-domain resource for transmitting the second signal.

Step 3: the UE receives the second signal, and obtains the feedback resource.

Step 4: the UE transmits the XR-service-related information through the feedback resource.

To be specific, the UE transmits through the feedback resource the MAC CE or PUCCH carrying the XR-service-related information. The MAC CE or PUCCH includes two kinds of bit fields, i.e., the service indication field XR-TI and the XR-service-related information field XR-Info. The service indication field is used to indicate the information about an XR service or XR services which are carried, and the XR-service-related information field is used to carry the XR-service-related information.

When the MAC CE carries information about the size of the UE playout buffer, as shown in Fig. 3, first M bits of the MAC CE are the service indication fields, in which a service indication field XR-TI 1 indicates a first XR service type, XR-TI 2 indicates a second XR service type, and XR-TI indicates a third XR service type. Last N bits of the MAC CE are the XR-service-related information fields, in which an XR-service-related information field XR-Info 1 carries the size of the UE playout buffer for a first XR service, XR-Info 2 carries the size of the UE playout buffer for a second XR service, and XR-Info 3 carries the size of the UE playout buffer for a third XR service.

A bit length of XR-Info is N, so probably 2^{N} sizes of the UE playout buffers may be indicated. As shown in Table 1, when N=3, 8 sizes of the UE playout buffers are indicated. Different indices correspond to different sizes of the UE playout buffers.

**Table 1**

| Index | UE playout buffer (ms) |
|---|---|
| 0 | Min |
| 1 | Min+1/7*(Max-Min) |
| 2 | Min+2/7*(Max-Min) |
| 3 | Min+3/7*(Max-Min) |
| 4 | Min+4/7*(Max-Min) |
| 5 | Min+5/7*(Max-Min) |
| 6 | Min+6/7*(Max-Min) |
| 7 | Max |
| Note: Max and Min represent a maximum value and a minimum value of the UE playout buffer | |

Step 5: the base station receives the XR-service-related information transmitted by the UE.

In the embodiments of the present disclosure, for a mode of requesting the feedback resource from the network device, the UE merely needs to request the feedback resource from the network device if necessary, and transmits the XR-service-related information through the feedback resource. The network device merely needs to receive a signal/channel carrying the XR-service-related information through the feedback resource allocated for the UE. In the embodiments of the present disclosure, the network device does not need to receive the feedback from the UE all the time, and the UE does not need to transmit feedback information frequently, so it is able to reduce an overhead for the network device and the UE.

In an optional embodiment of the present disclosure, when the network device notifies the UE of the feedback resource and the feedback condition through signaling, the implementation process includes the following steps.

Step 1: the UE determines the feedback resource and the feedback condition for the XR-service-related information through signaling, which includes the period of feedback, the time offset of feedback and the feedback event.

Step 2: the UE transmits the XR-service-related information through the feedback resource in accordance with the feedback condition, and there are the following three feedback mechanisms. (1) The UE calculates the time-domain position of the feedback occasion within each period in accordance with the period of feedback and the time offset of feedback, and transmits the XR-service-related information on the feedback occasion. (2) The UE transmits the XR-service-related information on a next available uplink transmission occasion merely in the case that the feedback event is triggered for a certain time period. (3) The UE transmits the XR-service-related information to the network device periodically in accordance with the period of feedback. When the UE detects that the feedback event configured by the network device has been triggered for a certain time period, the UE does not need to wait for a next period of feedback, and instead it directly transmits the XR-service-related information to the network device on the next available uplink transmission occasion. When the XR-service-related information is the size of the playout buffer, the network device configures the feedback resource and the feedback condition for the size of the UE playout buffer through signaling, which includes the period of feedback, the time offset of feedback and the feedback event. The UE transmits the size of the playout buffer to the network device periodically in accordance with the period of feedback. When the UE detects that the playing of the XR data frames is interrupted for a certain time period, the UE still transmits the size of the playout buffer to the network device even if it is not the time to feed back the size of the playout buffer.

Based on the above feedback mechanisms, the UE transmits the MAC CE or PUCCH carrying the XR-service-related information through the feedback resource. The MAC CE or PUCCH includes two kinds of bit fields, i.e., the service indication field XR-TI and the XR-service-related information field XR-Info. The service indication field is used to indicate information about an XR service or XR services which are carried, and the XR-service-related information field is used to carry the XR-service-related information.

When the PUCCH carries information about the size of the UE playout buffer, as shown in Fig. 3 (which shows the situation where the information about the size of eth UE playout buffer is carried by the PUCCH or the MAC CE), a service indication field XR-TI 1 indicates a first XR service type, XR-TI 2 indicates a second XR service type, and XR-TI indicates a third XR service type. An XR-service-related information field XR-Info 1 carries the size of the UE playout buffer for a first XR service, XR-Info 2 carries the size of the UE playout buffer for a second XR service, and XR-Info 3 carries the size of the UE playout buffer for a third XR service.

A bit length of XR-Info is N, so probably 2^{N} sizes of the UE playout buffers may be indicated. As shown in Table 1, when N=3, 8 sizes of the UE playout buffers are indicated. Different indices correspond to different sizes of the UE playout buffers.

Step 3: the network device receives the feedback from the UE, and obtains the XR-service-related information.

In the embodiments of the present disclosure, the network device configures the period of feedback and the time offset of feedback for the UE, the UE transmits the XR-service-related information on the configured time-domain resource, and the network device receives the XR-service-related information on the configured time-domain resource. When the network device has configured the feedback event, the UE merely needs to transmit the XR-service-related information when the feedback event is triggered, so it is able to reduce a transmission overhead for the UE. When the network device has configured the period of feedback, the time offset of feedback and the feedback event, the UE transmits the XR-service-related information on the configured time-domain resource. When the feedback event is triggered, the UE immediately transmits the XR-service-related information on a next available uplink resource. In this way, when there is a large change in the XR-service-related information, it is able for the UE to perform the feedback in time. For example, when there is large change in the size of the playout buffer, the UE does not need to transmit the information about the playout buffer on the time-domain resource within a next period of feedback. In this way, it is able to ensure that the network device performs the scheduling in accordance with the reliable XR-service-related information, thereby to prevent the XR data frames from being played discontinuously when the XR data frames are transmitted too late due to the out-of-date information.

In an optional embodiment of the present disclosure, the UE determines that the feedback condition is that the feedback is implemented based on the feedback event triggering, and whether to trigger the feedback event is determined by the UE.

The UE determines to trigger the feedback event when the playing of the XR data frames is interrupted for a certain time period. It should be appreciated that, the feedback event will not be particularly defined herein. The network device/UE determines a position of the feedback resource through the protocol, or the UE requests the network device for the position of the feedback resource.

When the position of the feedback resource is agreed in the protocol, the network device agrees with the UE through the protocol that the XR-service-related information is carried in the PUSCH carrying the uplink data service. When the UE detects that the playing of the XR data frames is interrupted for a certain time period, the UE transmits the XR-service-related information to the network device on a next PUSCH.

In an optional embodiment of the present disclosure, the network device indicates the feedback condition through indication signaling, i.e., indicates the UE to transmit or not transmit the XR-service-related information.

The network device determines that the feedback event is triggered, and transmits a signal/channel to the UE in accordance with the triggered feedback event, so as to indicate the UE to transmit the XR-service-related information. The network device/UE determines the position of the feedback resource in accordance with the signal/channel, or the network device agrees with the UE the position of the feedback resource through the protocol. Upon the receipt of the indication signaling transmitted by the network device, the UE transmits the XR-service-related information at the position of the feedback resource.

For example, the feedback event is triggered when a Channel Quality Indicator (CQI) of the UE is greater than a threshold. When the CQI is smaller than the threshold, it is impossible to perform the transmission correctly even if an entire bandwidth is allocated for the UE. In other words, when the CQI is smaller than the threshold, the network device does not schedule the UE even if the XR-service-related information is transmitted by the UE to the network device. The network device transmits the signal/channel to indicate the UE to transmit the XR-service-related information, and the signal/channel may also carry an indication about the position of the feedback resource. The UE receives the signal/channel, and transmits the XR-service-related information at the position of the feedback resource.

The network device determines that the no-feedback event is triggered, and transmits a signal/channel to indicate the UE not to transmit the XR-service-related information. The UE receives the signal/channel, and does not transmit the XR-service-related information.

For example, when the network device detects that the no-feedback event is triggered and the CQI of the UE is smaller than the threshold, the network device transmits a signal/channel before each feedback occasion, so as to indicate the UE not to transmit the XR-service-related information. The UE receives the signal/channel, and does not transmit the XR-service-related information.

According to the embodiments of the present disclosure, the UE transmits the XR-service-related information to the network device, and the network device performs the scheduling optimization in accordance with the information, so as to increase the XR capacity. When the network device knows the size of the UE playout buffer, it is provided with an additional PDB, and the network device is provided with more time to schedule the UE, so it is able to increase the XR capacity. In addition, when the network device knows the size of the UE playout buffer, it is able to relax the requirement on the PDB, thereby to improve the XR capacity.

After obtaining the XR-service-related information, the network device optimizes a parameter configuration for the UE in accordance with the XR-service-related information. For example, the UE transmits the XR-service-related information, e.g., the size of the UE playout buffer, to the network device, so that the network device knows the size of the UE playout buffer. At this time, even if the arrival of the data packet is not aligned with a DRX on duration, the data packet may also be transmitted within a next DRX cycle. Hence, the network device may configure a short on duration timer, so as to increase a power-saving gain.

For the mode of requesting the feedback resource from the network device, the UE merely needs to request the feedback resource from the network device if necessary, and transmits the XR-service-related information through the feedback resource. The network device merely needs to receive the signal/channel carrying the XR-service-related information through the feedback resource allocated for the UE, so it is able to reduce an overhead for the network device.

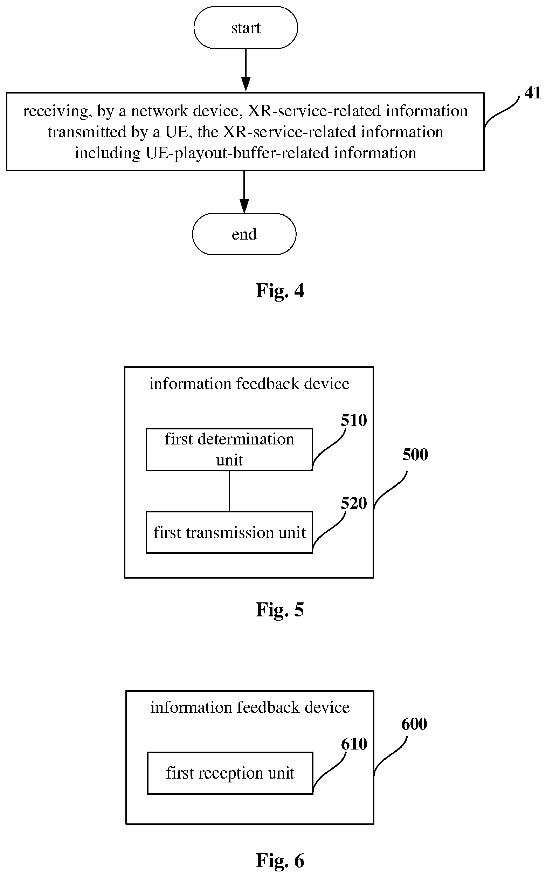

As shown in Fig. 4, the present disclosure further provides in some embodiments an information feedback method performed by a network device, which includes Step 41 of receiving, by the network device, XR-service-related information from a UE. The XR-service-related information includes UE-playout-buffer-related information.

The XR-service-related information is determined by the UE. Optionally, the UE determines the XR-service-related information in accordance with statistics of historical data, or determines the XR-service-related information through prediction using a target model. When the XR-service-related information is determined in accordance with the statistics of historical data, the XR-service-related information is obtained through counting the statistics of historical data within a long time period or a short time period. When the XR-service-related information is predicted using the target model, the target model is an AI model.

After determining the XR-service-related information, the UE reports the XR-service-related information to the network device. Upon the receipt of the XR-service-related information, the network device performs scheduling optimization and resource allocation optimization in accordance with the XR-service-related information.

Optionally, the information feedback method further includes performing scheduling optimization and resource allocation optimization in accordance with the XR-service-related information.

In the embodiments of the present disclosure, the UE transmits the XR-service-related information to the network device, and the network device performs the scheduling optimization in accordance with the XR-service-related information, so as to increase the XR capacity. When the network device, e.g., a gNB, knows the size of the UE playout buffer, the gNB is provided with an additional PDB, and the gNB is provided with more time to schedule the UE, so it is able to increase the XR capacity. In the embodiments of the present disclosure, the XR capacity refers to the quantity of UEs supporting an XR service in a cell. In a possible embodiment of the present disclosure, the XR capacity is defined as a maximum quantity of UEs in the cell when the quantity of UEs in the cell meeting a requirement is greater than a predetermined value (e.g., 90%). The UE meeting the requirement refers to a UE for which X% (e.g., 99%) of the data packets are transmitted successfully within the PDB. When the gNB knows the size of the UE playout buffer, it is able to relax the requirement on the PDB, and based on the definition on the XR capacity, it is also able to improve the XR capacity.

Optionally, after obtaining the XR-service-related information, the network device also optimizes a parameter configuration for the UE in accordance with the XR-service-related information. For example, the UE transmits the XR-service-related information, e.g., the size of the UE playout buffer, to the gNB, so that the gNB knows the size of the UE playout buffer. At this time, even if the arrival of the data packet is not aligned with a DRX on duration, the data packet may also be transmitted within a next DRX cycle. Hence, the network device may configure a short on duration timer, so as to increase a power-saving gain.

Optionally, the XR-service-related information includes the following information.
(1) UE-playout-buffer-related information, which includes at least one of: an absolute value of the size of the playout buffer (the network device directly obtains the size of the UE playout buffer in accordance with the absolute value); a change value in the size of the playout buffer (the network device indirectly obtains the size of the UE playout buffer at a current time point in accordance with the size of the UE playout buffer obtained at a previous feedback time point and a change value at the current time point); or a statistical average value of delays of data packets arriving at the UE (the statistical average value J of delays of data packets arriving at the UE is strongly related to the size of the playout buffer, i.e., the larger the value of J, the larger the UE playout buffer, vice versa).
   Optionally, the XR-service-related information further includes at least one of the followings.
(2) Uplink service model parameter.

Optionally, the method further includes determining at least one of the followings in accordance with the uplink service model parameter: a size of a data packet, an arrival time of the data packet and an uplink network jitter delay.

The uplink service model parameter is capable of reflecting the arrival time of the data packet for the uplink service and a probability distribution characteristic of the size of the data packet. The network device determines the size of the data packet, the arrival time of the data packet and the uplink network jitter delay in accordance with the uplink service model parameter.

Optionally, the uplink service model parameter includes at least one of an average value of sizes of data packets, a variance of the sizes of the data packets, a maximum value of the sizes of the data packets, a minimum value of the sizes of the data packets, an arrival period of the data packets, an average value of uplink network jitter delays, or a variance of the uplink network jitter delays.

(3) Uplink service QoS parameter. The uplink service QoS parameter includes at least one of an uplink service data packet delay budget, or uplink service data packet reliability.

In the embodiments of the present disclosure, the UE reports the XR-service-related information to the network device, and several XR video frames are stored in the playout buffer. A 60fps XR video frame has a period of 16.67ms, i.e., the absolute value of the size of the playout buffer is dozens, or even hundreds, of milliseconds, so usually the change in the size of the playout buffer is smaller. The UE transmits the change value in the size of the playout buffer to the network device, so it is able to reduce a part of a payload overhead.

For an XR service having a high throughput and a low latency, the UE transmits the XR-service-related information to the network device, so as to support the network device to perform the scheduling optimization on the UE. When the network device knows the size of the UE playout buffer, it is provided with an additional PDB, so the network device is provided with more time to schedule the UE, so as to increase the XR capacity. In addition, when the network device knows the size of the UE playout buffer, it is able to relax the requirement on the PDB, thereby to improve the XR capacity. Moreover, through obtaining the uplink service model parameter, the network device calculates the size of the data packet and the arrival time of the data packet in accordance with the probability, so as to allocate resources for the uplink service transmission, e.g., reserved resources for configured grant transmission. Through the reserved resources matching the service, it is able to increase the capacity.

In an optional embodiment of the present disclosure, the receiving the XR-service-related information transmitted by the UE includes receiving the XR-service-related information transmitted by the UE through a feedback resource in accordance with a feedback condition.

In the embodiments of the present disclosure, the feedback condition is determined by the UE, or configured by the network device. The feedback resource is agreed in a protocol, or configured by the network device. When the UE meets the feedback condition, it transmits the XR-service-related information at a position corresponding to the feedback resource.

Optionally, the receiving the XR-service-related information transmitted by the UE through the feedback resource in accordance with the feedback condition includes at least one of the followings.
(1) Receiving a PUSCH transmitted by the UE through the feedback resource when RRC connection is established or reestablished, the PUSCH carrying the XR-service-related information.
   Optionally, a bit field of the PUSCH includes a service indication field and an XR-service-related information field. The service indication field is used to indicate information about an XR service or XR services which are carried, and the XR-service-related information field is used to carry the XR-service-related information.
(2) Receiving an MAC CE transmitted by the UE through the feedback resource, the MAC CE carrying the XR-service-related information.

Optionally, a bit field of the MAC CE includes a service indication field and an XR-service-related information field.

In the embodiments of the present disclosure, the MAC CE carries the XR-service-related information, and the UE transmits the MAC CE carrying the XR-service-related information through the feedback resource. The MAC CE includes two kinds of bit fields, i.e., the service indication field XR-TI and the XR-service-related information field XR-Info. The service indication field is used to indicate information about an XR service or XR services which are carried, and the XR-service-related information field is used to carry the XR-service-related information.

(3) Receiving a PUCCH transmitted by the UE through the feedback resource, the PUCCH carrying UCI including the XR-service-related information.

Optionally, a bit field of the UCI includes a service indication field and an XR-service-related information field.

The PUCCH carries the XR-service-related information, and the UE transmits the PUCCH carrying the UCI including the XR-service-related information through the feedback resource. The UCI includes two kinds of bit fields, i.e., the service indication field XR-TI and the XR-service-related information field XR-Info. The service indication field is used to indicate information about an XR service or XR services which are carried, and the XR-service-related information field is used to carry the XR-service-related information.

In the embodiments of the present disclosure, the XR-service-related information may be transmitted to the network device through the PUSCH, or through the MAC CE or the PUCCH. The network device receives the XR-service-related information at the corresponding position of the feedback resource.

Optionally, the feedback resource and the feedback condition are configured by the network device. At this time, the method further includes configuring the feedback resource and/or feedback condition for the XR-service-related information for the UE.

The implementation of configuring, by the network device, the feedback resource and the feedback condition will be described hereinafter.

Optionally, the configuring for the UE the feedback resource for the XR service-related information includes: receiving resource configuration request information transmitted by the UE, and transmitting first indication signaling to the UE in accordance with the resource configuration request information, the first indication signaling indicating the feedback resource; or transmitting a preconfigured feedback resource to the UE through high-layer signaling.

In the embodiments of the present disclosure, the feedback resource may be a specific feedback position, i.e., the network device directly configures the specific feedback position at which the XR-service-related information is transmitted for the UE. The UE requests the network device to configure the feedback resource, or the feedback resource is preconfigured by the network device through high-layer signaling. When the UE requests the network device to configure the feedback resource, it transmits a first signal/channel (i.e., the resource configuration request information) to the network device, so as to request the network device to transmit the resource for the XR-service-related information. Upon the receipt of the request, the network device transmits a second signal/channel (i.e., the first indication signaling) for indicating the feedback resource to the UE. The UE transmits the MAC CE or PUCCH carrying the XR-service-related information through the feedback resource, and the network device receives the MAC CE or PUCCH so as to obtain the XR-service-related information.

Optionally, the feedback resource includes at least one of a period of feedback, a time offset of feedback, or a frequency-domain resource of feedback.

In the embodiments of the present disclosure, the feedback resource configured by the network device includes one or more of the period of feedback, the time offset of feedback or the frequency-domain resource of feedback. The UE calculates the time-domain position of the feedback occasion within each period in accordance with the period of feedback and the time offset of feedback, and transmits the XR-service-related information on the feedback occasion; and/or the UE determines the feedback frequency-domain position for the XR-service-related information in accordance with the frequency-domain resource of feedback, and transmits the XR-service-related information at the corresponding feedback frequency-domain position. In the case that the feedback resource is configured by the network device, the network device receives the XR-service-related information at the corresponding resource position.

Optionally, in the case that the feedback resource is configured by the network device for the UE, the network device may transmit an indication signal to the UE, so as to directly indicate the feedback position. For example, the UE requests the feedback resource from the network device if necessary, and the network device transmits the indication information to indicate a specific time-domain position and a specific frequency-domain position at which the feedback is performed by the UE. In this way, it is able for the UE to obtain the feedback resource without calculation in accordance with the period of feedback and the time offset of feedback.

Optionally, the configuring for the UE the feedback condition for the XR-service-related information includes transmitting feedback configuration information and/or second indication signaling to the UE, the feedback configuration information includes a feedback event, and the second indication signaling includes feedback indication signaling or no-feedback indication signaling. Optionally, the second indication signaling includes layer-1 signaling or an MAC CE.

In the embodiments of the present disclosure, the feedback condition is configured by the network device for the UE. To be specific, the feedback configuration information and/or the indication signaling are configured by the network device. The feedback configuration information includes the feedback event triggering. The UE receives the feedback event triggering, and when the UE detects that the feedback event has been triggered, it transmits the XR-service-related information to the network device through the feedback resource. The network device transmits the second indication signaling so as to dynamically indicate whether or not the feedback is to be performed by the UE.

The second indication signaling configured by the network device includes the feedback indication signaling or no-feedback indication signaling. The feedback indication signaling is used to indicate the UE to transmit the XR-service-related information, and the no-feedback indication signaling is used to indicate the UE not to transmit the XR-service-related information. To be specific, the network device determines that a feedback event is triggered, and transmits a signal/channel to indicate the UE to transmit the XR-service-related information in accordance with the triggered feedback event. The UE or the network device determines a position of the feedback resource in accordance with the signal/channel, or determines the position of the feedback resource through the protocol. Upon the receipt of the indication from the network device, the UE transmits the XR-service-related information at the position of the feedback resource. The XR-service-related information is carried on the MAC CE or PUCCH.

Alternatively, the network device determines that a no-feedback event is triggered, and transmits a signal/channel to indicate the UE not to transmit the XR-service-related information. Upon the receipt of the signal/channel, the UE does not transmit the XR-service-related information.

Optionally, the feedback condition is also determined by the UE, i.e., the UE determines that the feedback is performed when the feedback event is triggered. The feedback event is determined by the UE or configured by the network device. Optionally, the UE determines that the feedback event is to be triggered, and when the UE detects that the feedback event has been triggered, it transmits the XR-service-related information to the network device through the feedback resource.

Taking the transmitting the XR-service-related information in accordance with the triggered feedback event as an example, when the UE obtains the feedback condition configured by the network device or determined by itself and detects that the feedback event has been triggered for a first duration, the UE transmits the XR-service-related information on a next feedback occasion of a current time point.

In the embodiments of the present disclosure, when the UE detects that the feedback event has been triggered for a certain time period, the UE transmits the XR-service-related information on a next available uplink transmission occasion. It should be appreciated that, when the UE detects that the feedback event configured by the network device has been triggered for a certain time period, the UE does not need to wait for a next period of feedback, and instead, it directly transmits the XR-service-related information to the base station on the next available uplink transmission occasion.

In the embodiments of the present disclosure, the UE determines the periodical feedback occasion in accordance with the period of feedback and the time offset of feedback, and periodically transmits the XR-service-related information, and/or transmits the XR-service-related information in accordance with the feedback event. For example, the feedback event may be that the playing of the XR data frames is interrupted for a certain time period. The XR-service-related information may be carried by the MAC CE or PUCCH.

In the embodiments of the present disclosure, the feedback resource and the feedback condition for reporting, by the UE, the XR-service-related information are determined by the UE, or configured by the network device. Different implementations thereof are the same as those in the above-mentioned information feedback method for the UE, which will not be further particularly defined herein.

According to the embodiments of the present disclosure, the UE transmits the XR-service-related information to the network device, and the network device performs the scheduling optimization in accordance with the information, so as to increase the XR capacity. When the network device knows the size of the UE playout buffer, it is provided with an additional PDB, and the network device is provided with more time to schedule the UE, so it is able to increase the XR capacity. In addition, when the network device knows the size of the UE playout buffer, it is able to relax the requirement on the PDB, thereby to improve the XR capacity.

After obtaining the XR-service-related information, the network device optimizes a parameter configuration for the UE in accordance with the XR-service-related information. For example, the UE transmits the XR-service-related information, e.g., the size of the UE playout buffer, to the network device, so that the network device knows the size of the UE playout buffer. At this time, even if the arrival of the data packet is not aligned with a DRX on duration, the data packet may be transmitted within a next DRX cycle. Hence, the network device may configure a short on duration timer, so as to increase a power-saving gain.

For the mode of requesting the feedback resource from the network device, the UE merely needs to request the feedback resource from the network device if necessary, and transmits the XR-service-related information through the feedback resource. The network device merely needs to receive the signal/channel carrying the XR-service-related information through the feedback resource allocated for the UE, so it is able to reduce an overhead for the network device.

It should be appreciated that, the implementation of the method for the network device may refer to that in the above-mentioned method for the UE with a same technical effect, which will not be further particularly defined herein.

The information feedback method has been described hereinabove, and a corresponding device will be described hereinafter in conjunction with the embodiments and drawings.

As shown in Fig. 5, the present disclosure provides in some embodiments an information feedback device 500 applied to a UE, which includes: a first determination unit 510 configured to determine XR-service-related information, the XR-service-related information includes UE-playout-buffer-related information; and a first transmission unit 520 configured to transmit the XR-service-related information to a network device.

Optionally, the information feedback device further includes a first obtaining unit configured to obtain a feedback resource and a feedback condition for the XR-service-related information, and the first transmission unit 520 is specifically configured to transmit the XR-service-related information to the network device through the feedback resource in accordance with the feedback condition.

Optionally, the first determination unit 510 is specifically configured to: determine the XR-service-related information in accordance with statistics of historical data, or determine the XR-service-related information through prediction using a target model.

Optionally, the XR-service-related information includes at least one of an uplink service model parameter or an uplink service QoS parameter.

Optionally, the UE-playout-buffer-related information includes at least one of an absolute value of a size of a playout buffer, a change in the size of the playout buffer, or a statistical average value of delays of data packets arriving at the UE.

Optionally, the uplink service model parameter includes at least one of an average value of sizes of data packets, a variance of the sizes of the data packets, a maximum value of the sizes of the data packets, a minimum value of the sizes of the data packets, an arrival period of the data packets, an average value of uplink network jitter delays, or a variance of the uplink network jitter delays.

Optionally, the uplink service QoS parameter includes at least one of an uplink service data packet delay budget, or uplink service data packet reliability.

Optionally, the obtaining the feedback resource for the XR-service-related information includes: determining the feedback resource in accordance with a protocol; or obtaining the feedback resource configured by the network device.

Optionally, the first obtaining unit is specifically configured to: transmit resource configuration request information to the network device, and receive first indication signaling transmitted by the network device in accordance with the resource configuration request information, the first indication signaling indicating the feedback resource; or receive the feedback resource preconfigured by the network device through high-layer signaling.

Optionally, the feedback resource includes at least one of a period of feedback, a time offset of feedback, or a frequency-domain resource of feedback.

Optionally, the first transmission unit is specifically configured to: determine a time-domain position of a feedback occasion within each period of feedback in accordance with the period of feedback and the time offset of feedback, and transmit the XR-service-related information in the feedback occasion in accordance with the time-domain position; and/or determine a feedback frequency-domain position of the XR-service-related information in accordance with the frequency-domain resource of feedback, and transmit the XR-service-related information at the feedback frequency-domain position.

Optionally, the first obtaining unit is specifically configured to: determine that the feedback condition is that a feedback is based on a feedback event triggering; or obtain the feedback condition configured by the network device.

Optionally, the first obtaining unit is specifically configured to receive feedback configuration information and/or second indication signaling transmitted by the network device, the feedback configuration information includes the feedback event triggering, and the second indication signaling includes feedback indication signaling or no-feedback indication signaling.

Optionally, the second indication signaling includes layer-1 signaling or an MAC CE.

Optionally, the first transmission unit is specifically configured to, when it detects the feedback event triggering and a duration of the feedback event triggering reaches a first duration, transmit the XR-service-related information on a next feedback occasion of a current time point.

Optionally, when transmitting the XR-service-related information to the network device through the feedback resource, the first transmission unit is configured to perform at least one of: when RRC connection is established or reestablished, transmitting a PUSCH through the feedback resource, the PUSCH carrying the XR-service-related information; transmitting an MAC CE through the feedback resource, the MAC CE carrying the XR-service-related information; or transmitting a PUCCH through the feedback resource, the PUCCH carrying UCI including the XR-service-related information.

Optionally, a bit field of the PUSCH includes a service indication field and an XR-service-related information field.

Optionally, a bit field of the MAC CE includes a service indication field and an XR-service-related information field.

Optionally, a bit field of the UCI includes a service indication field and an XR-service-related information field.

It should be appreciated that, the device in the embodiments of the present disclosure is capable of implementing the steps of the above-mentioned method for the UE with a same technical effect, which will thus not be further particularly defined herein.

As shown in Fig. 6, the present disclosure further provides in some embodiments an information feedback device 600 applied to a network device, which includes a first reception unit 610 configured to receive XR-service-related information from a UE. The XR-service-related information includes UE-playout-buffer-related information.

Optionally, the device further includes a processing unit configured to perform scheduling optimization and/or resource allocation optimization in accordance with the XR-service-related information.

Optionally, the first reception unit 610 is specifically configured to receive the XR-service-related information transmitted by the UE through a feedback resource in accordance with a feedback condition.

Optionally, the XR-service-related information includes at least one of an uplink service model parameter or an uplink service QoS parameter.

Optionally, the UE-playout-buffer-related information includes at least one of an absolute value of a size of a playout buffer, a change in the size of the playout buffer, or a statistical average value of delays of data packets arriving at the UE.

Optionally, the uplink service model parameter includes at least one of an average value of sizes of data packets, a variance of the sizes of the data packets, a maximum value of the sizes of the data packets, a minimum value of the sizes of the data packets, an arrival period of the data packets, an average value of uplink network jitter delays, or a variance of the uplink network jitter delays.

Optionally, the device further includes a second determination unit configured to determine at least one of the following information in accordance with the uplink service model parameter: the size of the data packet, an arrival time of the data packet, or an uplink network jitter delay.

Optionally, the uplink service QoS parameter includes at least one of an uplink service data packet delay budget, or uplink service data packet reliability.

Optionally, the device further includes a configuration unit configured to configure the feedback resource and/or feedback condition for the XR-service-related information for the UE.

Optionally, the configuration unit is specifically configured to: receive resource configuration request information transmitted by the UE, and transmit first indication signaling to the UE in accordance with the resource configuration request information, the first indication signaling indicating the feedback resource; or transmit a preconfigured feedback resource to the UE through high-layer signaling.

Optionally, the feedback resource includes at least one of a period of feedback, a time offset of feedback, or a frequency-domain resource of feedback.

Optionally, the configuration unit is specifically configured to transmit feedback configuration information and/or second indication signaling to the UE, the feedback configuration information includes a feedback event, and the second indication signaling includes feedback indication signaling or no-feedback indication signaling.

Optionally, the second indication signaling includes layer-1 signaling or an MAC CE.

Optionally, the first reception unit is configured to perform at least one of: receiving a PUSCH transmitted by the UE through the feedback resource when RRC connection is established or reestablished, the PUSCH carrying the XR-service-related information; receiving an MAC CE transmitted by the UE through the feedback resource, the MAC CE carrying the XR-service-related information; or receiving a PUCCH transmitted by the UE through the feedback resource, the PUCCH carrying UCI including the XR-service-related information.

Optionally, a bit field of the PUSCH includes a service indication field and an XR-service-related information field.

Optionally, a bit field of the MAC CE includes a service indication field and an XR-service-related information field.

Optionally, a bit field of the UCI includes a service indication field and an XR-service-related information field.

It should be appreciated that, the device in the embodiments of the present disclosure is capable of implementing the steps of the above-mentioned method for the network device with a same technical effect, which will thus not be further particularly defined herein.

It should be appreciated that, the units in the embodiments of the present disclosure are for illustrative purposes, and they are provided merely on the basis of their logic functions. The units may be integrated in a processing unit, or physically separated from each other, or two or more units may be integrated in one unit. The integrated units may be implemented in the form of hardware or a software functional unit.

**In** the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a Read-Only Memory (ROM), a Random Access Memory (RAM), a magnetic disk or an optical disk.

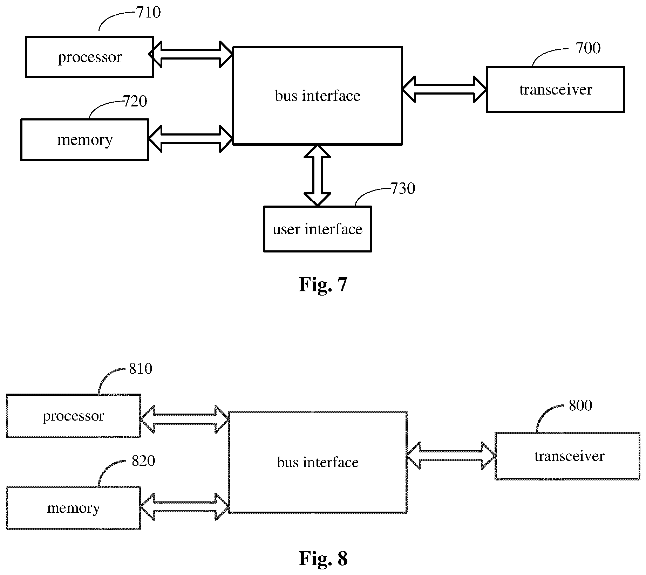

As shown in Fig. 7, the present disclosure further provides in some embodiments a UE, which includes a memory 720, a transceiver 700 and a processor 710. The memory 720 is configured to store therein a computer program, the transceiver 700 is configured to receive and transmit data under the control of the processor, the processor 700 is configured to read the computer program in the memory so as to determine XR-service-related information, the XR-service-related information includes UE-playout-buffer-related information, and the transceiver 700 is configured to transmit the XR-service-related information to a network device.

Optionally, the processor 710 is configured to read the computer program in the memory so as to obtain a feedback resource and a feedback condition for the XR-service-related information, and the transceiver 700 is configured to transmit the XR-service-related information to the network device through the feedback resource in accordance with the feedback condition.

Optionally, the processor 710 is configured to read the computer program in the memory, so as to: determine the XR-service-related information in accordance with statistics of historical data, or determine the XR-service-related information through prediction using a target model.

Optionally, the XR-service-related information includes at least one of an uplink service model parameter or an uplink service QoS parameter.

Optionally, the UE-playout-buffer-related information includes at least one of an absolute value of a size of a playout buffer, a change in the size of the playout buffer, or a statistical average value of delays of data packets arriving at the UE.

Optionally, the uplink service model parameter includes at least one of an average value of sizes of data packets, a variance of the sizes of the data packets, a maximum value of the sizes of the data packets, a minimum value of the sizes of the data packets, an arrival period of the data packets, an average value of uplink network jitter delays, or a variance of the uplink network jitter delays.

Optionally, the uplink service QoS parameter includes at least one of an uplink service data packet delay budget, or uplink service data packet reliability.

Optionally, the processor 710 is configured to read the computer program in the memory, so as to: determine the feedback resource in accordance with a protocol; or obtain the feedback resource configured by the network device.

Optionally, the processor 710 is configured to read the computer program in the memory, so as to: transmit resource configuration request information to the network device, and receive first indication signaling transmitted by the network device in accordance with the resource configuration request information, the first indication signaling indicating the feedback resource; or receive the feedback resource preconfigured by the network device through high-layer signaling.

Optionally, the feedback resource includes at least one of a period of feedback, a time offset of feedback, or a frequency-domain resource of feedback.

Optionally, the processor 710 is configured to read the computer program in the memory, so as to: determine a time-domain position of a feedback occasion within each period of feedback in accordance with the period of feedback and the time offset of feedback, and transmit the XR-service-related information in the feedback occasion in accordance with the time-domain position; and/or determine a feedback frequency-domain position of the XR-service-related information in accordance with the frequency-domain resource of feedback, and transmit the XR-service-related information at the feedback frequency-domain position.

Optionally, the processor 710 is configured to read the computer program in the memory, so as to: determine that the feedback condition is that a feedback is based on a feedback event triggering; or obtain the feedback condition configured by the network device.

Optionally, the transceiver 700 is configured to receive feedback configuration information and/or second indication signaling transmitted by the network device, the feedback configuration information includes the feedback event triggering, and the second indication signaling includes feedback indication signaling or no-feedback indication signaling.

Optionally, the second indication signaling includes layer-1 signaling or an MAC CE.

Optionally, the transceiver is configured to, when it detects the feedback event triggering and a duration of the feedback event triggering reaches a first duration, transmit the XR-service-related information on a next feedback occasion of a current time point.

Optionally, the transceiver 700 is configured to perform at least one of: when RRC connection is established or reestablished, transmitting a PUSCH through the feedback resource, the PUSCH carrying the XR-service-related information; transmitting an MAC CE through the feedback resource, the MAC CE carrying the XR-service-related information; or transmitting a PUCCH through the feedback resource, the PUCCH carrying UCI including the XR-service-related information.

Optionally, a bit field of the PUSCH includes a service indication field and an XR-service-related information field.

Optionally, a bit field of the MAC CE includes a service indication field and an XR-service-related information field.

Optionally, a bit field of the UCI includes a service indication field and an XR-service-related information field.

It should be appreciated that, in Fig. 7, bus architecture may include a number of buses and bridges connected to each other, so as to connect various circuits for one or more processors 710 and one or more memories 720. In addition, as is known in the art, the bus architecture may be used to connect any other circuits, such as a circuit for a peripheral device, a circuit for a voltage stabilizer and a power management circuit. A bus interface may be provided, and the transceiver 700 may consist of a plurality of elements, i.e., a transmitter and a receiver for communication with any other devices over a transmission medium. With respect to different UEs, a user interface 730 may also be provided for devices which are to be arranged inside or outside the UE, and these devices may include but not limited to a keypad, a display, a speaker, a microphone and a joystick. The processor 710 may take charge of managing the bus architecture as well as general processings. The memory 720 may store therein data for the operation of the processor 710.

Optionally, the processor 710 is a Central Processing Unit (CPU), an Application Specific Integrated Circuit (ASIC), a Field-Programmable Gate Array (FPGA) or a Complex Programmable Logic Device (CPLD). The processor may also use multi-core architecture.

The processor is configured to call the computer program in the memory, so as to implement the above-mentioned method in accordance with obtained executable instructions. The processor may also be physically separated from the memory.

It should be appreciated that, the UE in the embodiments of the present disclosure is capable of implementing the steps of the above-mentioned method for the UE with a same technical effect, which will thus not be further particularly defined herein.

As shown in Fig. 8, the present disclosure further provides in some embodiments a network device, which includes a memory 820, a transceiver 800, and a processor 810. The memory 820 is configured to store therein a computer program, the processor 810 is configured to read the computer program in the memory, the transceiver 800 is configured to receive and transmit data under the control of the processor 810 so as to receive XR-service-related information from a UE, and the XR-service-related information includes UE-playout-buffer-related information.

Optionally, the processor 810 is configured to read the computer program in the memory so as to perform scheduling optimization and/or resource allocation optimization in accordance with the XR-service-related information.

Optionally, the transceiver is configured to receive the XR-service-related information transmitted by the UE through a feedback resource in accordance with a feedback condition.

Optionally, the XR-service-related information includes at least one of an uplink service model parameter or an uplink service QoS parameter.

Optionally, the UE-playout-buffer-related information includes at least one of an absolute value of a size of a playout buffer, a change in the size of the playout buffer, or a statistical average value of delays of data packets arriving at the UE.

Optionally, the uplink service model parameter includes at least one of an average value of sizes of data packets, a variance of the sizes of the data packets, a maximum value of the sizes of the data packets, a minimum value of the sizes of the data packets, an arrival period of the data packets, an average value of uplink network jitter delays, or a variance of the uplink network jitter delays.

Optionally, the processor 810 is configured to read the computer program in the memory, so as to determine at least one of the following information in accordance with the uplink service model parameter: the size of the data packet, an arrival time of the data packet, or an uplink network jitter delay.

Optionally, the uplink service QoS parameter includes at least one of an uplink service data packet delay budget, or uplink service data packet reliability.

Optionally, the processor 810 is configured to read the computer program in the memory, so as to configure the feedback resource and/or feedback condition for the XR-service-related information for the UE.

Optionally, the transceiver 800 is configured to: receive resource configuration request information transmitted by the UE, and transmit first indication signaling to the UE in accordance with the resource configuration request information, the first indication signaling indicating the feedback resource; or transmit a preconfigured feedback resource to the UE through high-layer signaling.

Optionally, the feedback resource includes at least one of a period of feedback, a time offset of feedback, or a frequency-domain resource of feedback.

Optionally, the transceiver 800 is configured to transmit feedback configuration information and/or second indication signaling to the UE, the feedback configuration information includes a feedback event, and the second indication signaling includes feedback indication signaling or no-feedback indication signaling.

Optionally, the second indication signaling includes layer-1 signaling or an MAC CE.

Optionally, when receiving the XR-service-related information transmitted by the UE through the feedback resource in accordance with the feedback condition, the transceiver 800 is configured to perform at least one of: receiving a PUSCH transmitted by the UE through the feedback resource when RRC connection is established or reestablished, the PUSCH carrying the XR-service-related information; receiving an MAC CE transmitted by the UE through the feedback resource, the MAC CE carrying the XR-service-related information; or receiving a PUCCH transmitted by the UE through the feedback resource, the PUCCH carrying UCI including the XR-service-related information.

Optionally, a bit field of the PUSCH includes a service indication field and an XR-service-related information field.

Optionally, a bit field of the MAC CE includes a service indication field and an XR-service-related information field.

Optionally, a bit field of the UCI includes a service indication field and an XR-service-related information field.

In Fig. 8, bus architecture may include a number of buses and bridges connected to each other, so as to connect various circuits for one or more processors 810 and one or more memories 820. In addition, as is known in the art, the bus architecture may be used to connect any other circuits, such as a circuit for a peripheral device, a circuit for a voltage stabilizer and a power management circuit. A bus interface may be provided, and the transceiver 800 may consist of a plurality of elements, i.e., a transmitter and a receiver for communication with any other devices over a transmission medium. The processor 810 may take charge of managing the bus architecture as well as general processings. The memory 820 may store therein data for the operation of the processor 810.

The processor 810 may be a CPU, an ASIC, an FPGA or a CPLD. The processor may also use multi-core architecture.

It should be appreciated that, the network device in the embodiments of the present disclosure is capable of implementing the steps of the above-mentioned method for the network device with a same technical effect, which will thus not be further particularly defined herein.

The present disclosure further provides in some embodiments a processor-readable storage medium storing therein a computer program. The computer program is used to be executed by a processor so as to implement the above-mentioned information feedback method with a same technical effect, which will thus not be further particularly defined herein. The processor-readable storage medium may be any available medium or data storage device capable of being accessed by a processor, which includes, but not limited to, a magnetic memory (e.g., floppy disk, hard disk, magnetic tape, or Magnetic Optical disk (MO)), an optical memory (e.g., Compact Disk (CD), Digital Video Disk (DVD), Blue-ray Disk (BD), or High-definition Versatile Disk (HVD)), or a semiconductor memory (e.g., ROM, Electrically Programmable ROM (EPROM), Electrically Erasable PROM (EEPROM), NAND flash, or Solid-State Disk (SSD)).

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be further appreciated that, the above modules in the network device and the UE are divided merely on the basis of their logic functions, and in actual use, they may be completely or partially integrated into a physical entity, or physically separated from each other. These modules may be implemented by calling software through a processing element, or implemented in the form of hardware. For example, the determination module may be a processing element arranged separately, or integrated into a chip of the above-mentioned device. In addition, the determination module may be stored in the memory of the above-mentioned device in the form of a program code, and may be called and executed by a processing element of the above-mentioned device so as to achieve the above functions. The other modules may be implemented in a similar manner. All or parts of the modules may be integrated together or arranged separately. Here, the modules, units or assemblies may each of an Integrated Circuit (IC) having a signal processing capability. During the implementation, the steps of the method or the modules may be implemented through an integrated logic circuit of the processing element in the form of hardware or through instructions in the form of software.

For example, the above modules, units, sub-units or sub-modules may be one or more ICs capable of implementing the above-mentioned method, e.g., one or more Application Specific Integrated Circuits (ASICs), one or more Digital Signal Processors (DSPs), or one or more Field Programmable Gate Array (FPGA). For another example, when a certain module is implemented by calling a program code through a processing element, the processing element may be a general-purpose processor, e.g., a Central Processing Unit (CPU) or any other processor capable of calling the program code. These modules may be integrated together and implemented in the form of system-on-a-chip (SOC).

Such words as "first" and "second" involved in the specification and the appended claims are merely used to differentiate different objects rather than to represent any specific order. It should be appreciated that, the data used in this way may be replaced with each other, so as to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device. The expression "and/or" in the description and the appended claims is merely used to represent at least one of the objects before and after the expression. For example, "A and/or B and/or C" represents seven situations, i.e., there is only A, there is only B, there is only C, there are both A and B, there are both B and C, there are both A and C, and there are A, B and C. Similarly, the phrase "at least one of A or B" in the specification and the appended claims shall be understood as "there is only A, there is only B, or there are both A and B".

It is apparent that the skilled person in the art can make various modifications and variations to the present application without departing from the scope of the present application. Thus, if these modifications and variations fall within the scope of the claims of the present application the present application also intends to include these modifications and variations therein.

## Claims

1. An information feedback method, comprising:
determining (21), by a User Equipment, UE, eXtend Reality XR-service-related information, the XR-service-related information comprising UE-playout-buffer-related information; and
transmitting (22), by the UE, the XR-service-related information to a network device;
the method further comprises:
obtaining a feedback resource and a feedback condition for the XR-service-related information,
wherein the transmitting the XR-service-related information to the network device comprises:
transmitting the XR-service-related information to the network device through the feedback resource in accordance with the feedback condition;
wherein the transmitting the XR-service-related information to the network device through the feedback resource comprises at least one of:
when Radio Resource Control, RRC, is established or reestablished, transmitting a Physical Uplink Shared Channel, PUSCH, through the feedback resource, the PUSCH carrying the XR-service-related information;
transmitting an MAC CE through the feedback resource, the MAC CE carrying the XR-service-related information; or
transmitting a Physical Uplink Control Channel, PUCCH, through the feedback resource, the PUCCH carrying Uplink Control Information, UCI, comprising the XR-service-related information,
wherein a bit field of the PUSCH comprises a service indication field and an XR-service-related information field; or
wherein a bit field of the MAC CE comprises a service indication field and an XR-service-related information field; or
wherein a bit field of the UCI comprises a service indication field and an XR-service-related information field.

2. The information feedback method according to claim 1,
wherein the determining the XR-service-related information comprises:
determining the XR-service-related information in accordance with statistics of historical data; or
determining the XR-service-related information through prediction using a target model,
or
wherein the XR-service-related information comprises at least one of:
an uplink service model parameter; or
an uplink service Quality of Service, QoS, parameter, or
wherein the UE-playout-buffer-related information comprises at least one of:
an absolute value of a size of a playout buffer;
a change in the size of the playout buffer; or
a statistical average value of delays of data packets arriving at the UE.

3. The information feedback method according to claim 2, wherein when the XR-service-related information comprises the uplink service model parameter, the uplink service model parameter comprises at least one of:
an average value of sizes of data packets;
a variance of the sizes of the data packets;
a maximum value of the sizes of the data packets;
a minimum value of the sizes of the data packets;
an arrival period of the data packets;
an average value of uplink network jitter delays; or
a variance of the uplink network jitter delays.

4. The information feedback method according to claim 2, wherein when the XR-service-related information comprises the uplink service QoS parameter, the uplink service QoS parameter comprises at least one of:
an uplink service data packet delay budget; or
uplink service data packet reliability.

5. The information feedback method according to claim 1, wherein the obtaining the feedback resource for the XR-service-related information comprises:
determining the feedback resource in accordance with a protocol; or
obtaining the feedback resource configured by the network device.

6. The information feedback method according to claim 5, wherein the obtaining the feedback resource configured by the network device comprises:
transmitting resource configuration request information to the network device, and receiving first indication signaling transmitted by the network device in accordance with the resource configuration request information, the first indication signaling indicating the feedback resource; or
receiving the feedback resource preconfigured by the network device through high-layer signaling.

7. The information feedback method according to claim 1, 5 or 6, wherein the feedback resource comprises at least one of:
a period of feedback;
a time offset of feedback; or
a frequency-domain resource of feedback.

8. The information feedback method according to claim 7, wherein the transmitting the XR-service-related information to the network device through the feedback resource comprises:
determining a time-domain position of a feedback occasion within each period of feedback in accordance with the period of feedback and the time offset of feedback, and transmitting the XR-service-related information on the feedback occasion in accordance with the time-domain position; and/or
determining a feedback frequency-domain position of the XR-service-related information in accordance with the frequency-domain resource of feedback, and transmitting the XR-service-related information at the feedback frequency-domain position.

9. The information feedback method according to claim 1, wherein the obtaining the feedback condition for the XR-service-related information comprises:
determining that the feedback condition is that a feedback is based on a feedback event triggering; or
obtaining the feedback condition configured by the network device.

10. The information feedback method according to claim 9, wherein the obtaining the feedback condition configured by the network device comprises:
receiving feedback configuration information and/or second indication signaling transmitted by the network device,
wherein the feedback configuration information comprises the feedback event triggering;
the second indication signaling comprises feedback indication signaling or no-feedback indication signaling,
wherein the second indication signaling comprises: layer-1 signaling or a Medium Access Control Control Element, MAC CE.

11. An information feedback method, comprising:
receiving (41), by a network device, eXtend Reality XR-service-related information transmitted by a User Equipment, UE,
wherein the XR-service-related information comprises UE-playout-buffer-related information;
wherein the network device receives the XR-service-related information through the feedback resource in accordance with the feedback condition;
wherein receiving the XR-service-related information through the feedback resource comprises at least one of: when Radio Resource Control, RRC, is established or reestablished, receiving a Physical Uplink Shared Channel, PUSCH, through the feedback resource, the PUSCH carrying the XR-service-related information;
receiving an MAC CE through the feedback resource, the MAC CE carrying the XR-service-related information; or
receiving a Physical Uplink Control Channel, PUCCH, through the feedback resource, the PUCCH carrying Uplink Control Information, UCI, comprising the XR-service-related information,
wherein a bit field of the PUSCH comprises a service indication field and an XR-service-related information field; or
wherein a bit field of the MAC CE comprises a service indication field and an XR-service-related information field; or
wherein a bit field of the UCI comprises a service indication field and an XR-service-related information field.

12. An information feedback device (500), comprising:
a first determination unit (510), configured to determine eXtend Reality XR-service-related information, the XR-service-related information comprising User Equipment UE-playout-buffer-related information; and
a first transmission unit (520), configured to transmit the XR-service-related information to a network device;
wherein the XR-service-related information is transmitted to the network device through the feedback resource in accordance with the feedback condition;
wherein the transmitting the XR-service-related information to the network device through the feedback resource comprises at least one of:
when Radio Resource Control, RRC, is established or reestablished, transmitting a Physical Uplink Shared Channel, PUSCH, through the feedback resource, the PUSCH carrying the XR-service-related information;
transmitting an MAC CE through the feedback resource, the MAC CE carrying the XR-service-related information; or
transmitting a Physical Uplink Control Channel, PUCCH, through the feedback resource, the PUCCH carrying Uplink Control Information, UCI, comprising the XR-service-related information,
wherein a bit field of the PUSCH comprises a service indication field and an XR-service-related information field; or
wherein a bit field of the MAC CE comprises a service indication field and an XR-service-related information field; or
wherein a bit field of the UCI comprises a service indication field and an XR-service-related information field.

13. An information feedback device (600), comprising:
a first reception unit (610), configured to receive eXtend Reality (XR)-service-related information transmitted by a User Equipment, UE,
wherein the XR-service-related information comprises UE-playout-buffer-related information;
wherein the XR-service-related information is received through the feedback resource in accordance with the feedback condition;
wherein receiving the XR-service-related information through the feedback resource comprises at least one of: when Radio Resource Control, RRC, is established or reestablished,
receiving a Physical Uplink Shared Channel, PUSCH, through the feedback resource, the PUSCH carrying the XR-service-related information;
receiving an MAC CE through the feedback resource, the MAC CE carrying the XR-service-related information; or
receiving a Physical Uplink Control Channel, PUCCH, through the feedback resource, the PUCCH carrying Uplink Control Information, UCI, comprising the XR-service-related information,
wherein a bit field of the PUSCH comprises a service indication field and an XR-service-related information field; or
wherein a bit field of the MAC CE comprises a service indication field and an XR-service-related information field; or
wherein a bit field of the UCI comprises a service indication field and an XR-service-related information field.

## Patentansprüche

1. Informationsrückmeldungsverfahren, umfassend:
Bestimmen (21), durch eine Benutzereinrichtung, UE, von eXtend-Reality-Dienst, XR-Dienst,-bezogenen Informationen, die XR-Dienst-bezogenen Informationen umfassend UE-Playout-Puffer-bezogene Informationen; und
Übertragen (22), durch die UE, der XR-Dienst-bezogenen Informationen an eine Netzwerkvorrichtung;
das Verfahren ferner umfasst:
Erhalten einer Rückmeldungsressource und einer Rückmeldungsbedingung für die XR-Dienst-bezogenen Informationen,
wobei das Übertragen der XR-Dienst-bezogenen Informationen an die Netzwerkvorrichtung umfasst:
Übertragen der XR-Dienst-bezogenen Informationen an die Netzwerkvorrichtung über die Rückmeldungsressource gemäß der Rückmeldungsbedingung;
wobei das Übertragen der XR-Dienst-bezogenen Informationen an die Netzwerkvorrichtung über die Rückmeldungsressource mindestens eines umfasst von:
wenn eine Funkressourcensteuerung, RRC, aufgebaut oder wiederaufgebaut wird, Übertragen eines physischen gemeinsam genutzten Uplink-Kanals, PUSCH, über die Rückmeldungsressource, wobei der PUSCH die XR-Dienst-bezogenen Informationen trägt;
Übertragen eines MAC CE über die Rückmeldungsressource, wobei das MAC CE die XR-Dienst-bezogenen Informationen trägt; oder
Übertragen eines physischen gemeinsam genutzten Uplink-Kanals, PUCCH, über die Rückmeldungsressource, wobei der PUCCH Uplink-Steuerinformationen, UCI, trägt, umfassend die XR-Dienst-bezogenen Informationen,
wobei ein Bitfeld des PUSCH ein Dienstanzeigefeld und ein XR-Dienstbezogenes Informationsfeld umfasst; oder
wobei ein Bitfeld des MAC CE ein Dienstanzeigefeld und ein XR-Dienstbezogenes Informationsfeld umfasst; oder
wobei ein Bitfeld der UCI ein Dienstanzeigefeld und ein XR-Dienstbezogenes Informationsfeld umfasst.

2. Informationsrückmeldungsverfahren nach Anspruch 1,
wobei das Bestimmen der XR-Dienst-bezogenen Informationen umfasst:
Bestimmen der XR-Dienst-bezogenen Informationen gemäß Statistiken historischer Daten; oder
Bestimmen der XR-Dienst-bezogenen Informationen über eine Vorhersage unter Verwendung eines Zielmodells,
oder
wobei die XR-Dienst-bezogenen Informationen mindestens eines umfassen von:
einem Uplink-Dienstmodellparameter; oder
einem Uplink-Dienstgüte-Parameter, QoS-Parameter,
oder
wobei die UE-Playout-Puffer-bezogenen Informationen mindestens eines umfassen von:
einem Absolutwert einer Größe eines Playout-Puffers;
einer Änderung der Größe des Playout-Puffers; oder
einem statistischen Durchschnittswert von Verzögerungen von Datenpaketen, die bei der UE ankommen.

3. Informationsrückmeldungsverfahren nach Anspruch 2, wobei, wenn die XR-Dienst-bezogenen Informationen den Uplink-Dienstmodellparameter umfassen, der Uplink-Dienstmodellparameter mindestens eines umfasst von:
einem Durchschnittswert von Größen von Datenpaketen;
einer Varianz der Größen der Datenpakete;
einem Maximalwert der Größen der Datenpakete;
einem Mindestwert der Größen der Datenpakete;
einer Ankunftsperiode der Datenpakete;
einem Durchschnittswert von Uplink-Netzwerk-Jitter-Verzögerungen; oder
einer Varianz der Uplink-Netzwerk-Jitter-Verzögerungen.

4. Informationsrückmeldungsverfahren nach Anspruch 2, wobei, wenn die XR-Dienst-bezogenen Informationen den Uplink-Dienst-QoS-Parameter umfassen, der Uplink-Dienst-QoS-Parameter mindestens eines umfasst von:
einem Verzögerungsbudget eines Uplink-Dienstdatenpakets; oder
einer Zuverlässigkeit des Uplink-Dienstdatenpakets.

5. Informationsrückmeldungsverfahren nach Anspruch 1, wobei das Erhalten der Rückmeldungsressource für die XR-Dienst-bezogenen Informationen umfasst:
Bestimmen der Rückmeldungsressource gemäß einem Protokoll; oder
Erhalten der Rückmeldungsressource, die durch die Netzwerkvorrichtung konfiguriert ist.

6. Informationsrückmeldungsverfahren nach Anspruch 5, wobei das Erhalten der Rückmeldungsressource, die durch die Netzwerkvorrichtung konfiguriert ist, umfasst:
Übertragen von Ressourcenkonfigurationsanfrageinformationen an die Netzwerkvorrichtung und Empfangen einer ersten Anzeigesignalisierung, die durch die Netzwerkvorrichtung gemäß den Ressourcenkonfigurationsanfrageinformationen übertragen wird, wobei die erste Anzeigesignalisierung die Rückmeldungsressource anzeigt; oder
Empfangen der Rückmeldungsressource, die durch die Netzwerkvorrichtung über Signalisierung höherer Schichten vorkonfiguriert ist.

7. Informationsrückmeldungsverfahren nach Anspruch 1, 5 oder 6, wobei die Rückmeldungsressource mindestens eines umfasst von:
einer Periode der Rückmeldung;
einem Zeitversatz der Rückmeldung; oder
einer Frequenzbereichsressource der Rückmeldung.

8. Informationsrückmeldungsverfahren nach Anspruch 7, wobei das Übertragen der XR-Dienst-bezogenen Informationen an die Netzwerkvorrichtung über die Rückmeldungsressource umfasst:
Bestimmen einer Zeitbereichsposition einer Rückmeldungsgelegenheit innerhalb jeder Periode der Rückmeldung gemäß der Periode der Rückmeldung und dem Zeitversatz der Rückmeldung, und Übertragen der XR-Dienst-bezogenen Informationen bei der Rückmeldungsgelegenheit gemäß der Zeitbereichsposition; und/oder
Bestimmen einer Rückmeldungsfrequenzbereichsposition der Rückmeldung der XR-Dienst-bezogenen Informationen gemäß der Frequenzbereichsressource der Rückmeldung und Übertragen der XR-Dienst-bezogenen Informationen an der Rückmeldungsfrequenzbereichsposition.

9. Informationsrückmeldungsverfahren nach Anspruch 1, wobei das Erhalten der Rückmeldungsbedingung für die XR-Dienst-bezogenen Informationen umfasst:
Bestimmen, dass die Rückmeldungsbedingung darin besteht, dass eine Rückmeldung auf einer Rückmeldungsereignisauslösung basiert; oder
Erhalten der Rückmeldungsbedingung, die durch die Netzwerkvorrichtung konfiguriert ist.

10. Informationsrückmeldungsverfahren nach Anspruch 9, wobei das Erhalten der Rückmeldungsbedingung, die durch die Netzwerkvorrichtung konfiguriert ist, umfasst:
Empfangen von Rückmeldungskonfigurationsinformationen und/oder zweiter Anzeigesignalisierung, die durch die Netzwerkvorrichtung übertragen werden,
wobei die Rückmeldungskonfigurationsinformationen die Rückmeldungsereignisauslösung umfassen;
die zweite Anzeigesignalisierung eine Rückmeldungsanzeigesignalisierung oder Keine-Rückmeldungsanzeigesignalisierung umfasst,
wobei die zweite Anzeigesignalisierung umfasst: Signalisierung einer Schicht-1 oder ein Medienzugriffssteuerungs-Steuerelement, MAC CE.

11. Informationsrückmeldungsverfahren, umfassend:
Empfangen (41), durch eine Netzwerkvorrichtung, von eXtended Reality-Dienst, XR-Dienst,-bezogenen Informationen, die durch eine Benutzereinrichtung, UE, übertragen werden,
wobei die XR-Dienst-bezogenen Informationen UE-Playout-Puffer-bezogene Informationen umfassen;
wobei die Netzwerkvorrichtung die XR-Dienst-bezogenen Informationen über die Rückmeldungsressource gemäß der Rückmeldungsbedingung empfängt;
wobei das Empfangen der XR-Dienst-bezogenen Informationen über die Rückmeldungsressource mindestens eines umfasst von:
wenn die Funkressourcensteuerung, RRC, aufgebaut oder wiederaufgebaut wird, Empfangen eines physischen gemeinsam genutzten Uplink-Kanals, PUSCH, über die Rückmeldungsressource, wobei der PUSCH die XR-Dienst-bezogenen Informationen trägt;
Empfangen eines MAC CE über die Rückmeldungsressource, wobei das MAC CE die XR-Dienst-bezogenen Informationen trägt; oder
Empfangen eines physischen gemeinsam genutzten Uplink-Kanals, PUCCH, über die Rückmeldungsressource, wobei der PUCCH Uplink-Steuerinformationen, UCI, trägt, umfassend die XR-Dienst-bezogenen Informationen,
wobei ein Bitfeld des PUSCH ein Dienstanzeigefeld und ein XR-Dienstbezogenes Informationsfeld umfasst; oder
wobei ein Bitfeld des MAC CE ein Dienstanzeigefeld und ein XR-Dienstbezogenes Informationsfeld umfasst; oder
wobei ein Bitfeld der UCI ein Dienstanzeigefeld und ein XR-Dienstbezogenes Informationsfeld umfasst.

12. Informationsrückmeldungsvorrichtung (500), umfassend:
eine erste Bestimmungseinheit (510), die konfiguriert ist, um eXtend-Reality-Dienst, XR-Dienst,-bezogene Informationen zu bestimmen, die XR-Dienst-bezogenen Informationen umfassend Benutzereinrichtungs-Playout-Puffer, UE-Playout-Puffer,-bezogene Informationen; und
eine erste Übertragungseinheit (520), die konfiguriert ist, um die XR-Dienst-bezogenen Informationen an eine Netzwerkvorrichtung zu übertragen;
wobei die XR-Dienst-bezogenen Informationen an die Netzwerkvorrichtung über die Rückmeldungsressource gemäß der Rückmeldungsbedingung übertragen werden;
wobei das Übertragen der XR-Dienst-bezogenen Informationen an die Netzwerkvorrichtung über die Rückmeldungsressource mindestens eines umfasst von:
wenn eine Funkressourcensteuerung, RRC, aufgebaut oder wiederaufgebaut wird, Übertragen eines physischen gemeinsam genutzten Uplink-Kanals, PUSCH, über die Rückmeldungsressource, wobei der PUSCH die XR-Dienst-bezogenen Informationen trägt;
Übertragen eines MAC CE über die Rückmeldungsressource, wobei das MAC CE die XR-Dienst-bezogenen Informationen trägt; oder
Übertragen eines physischen gemeinsam genutzten Uplink-Kanals, PUCCH, über die Rückmeldungsressource, wobei der PUCCH Uplink-Steuerinformationen, UCI, trägt, umfassend die XR-Dienst-bezogenen Informationen,
wobei ein Bitfeld des PUSCH ein Dienstanzeigefeld und ein XR-Dienstbezogenes Informationsfeld umfasst; oder
wobei ein Bitfeld des MAC CE ein Dienstanzeigefeld und ein XR-Dienstbezogenes Informationsfeld umfasst; oder
wobei ein Bitfeld der UCI ein Dienstanzeigefeld und ein XR-Dienstbezogenes Informationsfeld umfasst.

13. Informationsrückmeldungsvorrichtung (600), umfassend:
eine erste Empfangseinheit (610), die konfiguriert ist, um eXtend-Reality-Dienst(XR-Dienst)-bezogene Informationen zu empfangen, die durch eine Benutzereinrichtung, UE, übertragen werden,
wobei die XR-Dienst-bezogenen Informationen UE-Playout-Puffer-bezogene Informationen umfassen;
wobei die XR-Dienst-bezogenen Informationen über die Rückmeldungsressource gemäß der Rückmeldungsbedingung empfangen werden;
wobei das Empfangen der XR-Dienst-bezogenen Informationen über die Rückmeldungsressource mindestens eines umfasst von;
wenn die Funkressourcensteuerung, RRC, aufgebaut oder wiederaufgebaut wird, Empfangen eines physischen gemeinsam genutzten Uplink-Kanals, PUSCH, über die Rückmeldungsressource, wobei der PUSCH die XR-Dienst-bezogenen Informationen trägt;
Empfangen eines MAC CE über die Rückmeldungsressource, wobei das MAC CE die XR-Dienst-bezogenen Informationen trägt; oder
Empfangen eines physischen gemeinsam genutzten Uplink-Kanals, PUCCH, über die Rückmeldungsressource, wobei der PUCCH Uplink-Steuerinformationen, UCI, trägt, umfassend die XR-Dienst-bezogenen Informationen,
wobei ein Bitfeld des PUSCH ein Dienstanzeigefeld und ein XR-Dienstbezogenes Informationsfeld umfasst; oder
wobei ein Bitfeld des MAC CE ein Dienstanzeigefeld und ein XR-Dienstbezogenes Informationsfeld umfasst; oder
wobei ein Bitfeld der UCI ein Dienstanzeigefeld und ein XR-Dienstbezogenes Informationsfeld umfasst.

## Revendications

1. Procédé de rétroaction d'informations, comprenant :
la détermination (21), par un équipement utilisateur, UE, d'informations relatives au service de réalité augmentée, XR, les informations relatives au service XR comprenant des informations relatives au tampon de lecture de l'UE ; et
la transmission (22), par l'UE, des informations relatives au service XR à un dispositif de réseau ;
le procédé comprend en outre :
l'obtention d'une ressource de rétroaction et d'une condition de rétroaction pour les informations relatives au service XR,
dans lequel la transmission des informations relatives au service XR au dispositif de réseau comprend :
la transmission des informations relatives au service XR au dispositif de réseau par le biais de la ressource de rétroaction conformément à la condition de rétroaction ;
dans lequel la transmission des informations relatives au service XR au dispositif de réseau par le biais de la ressource de rétroaction comprend au moins l'un parmi :
lorsque la commande de ressources radio, RRC, est établie ou rétablie, la transmission d'un canal partagé de liaison montante physique, PUSCH, par le biais de la ressource de rétroaction, le PUSCH transportant les informations relatives au service XR ;
la transmission d'un CE MAC par le biais de la ressource de rétroaction, le CE MAC transportant les informations relatives au service XR ; ou
la transmission d'un canal de commande de liaison montante physique, PUCCH, par le biais de la ressource de rétroaction, le PUCCH transportant des informations de commande de liaison montante, UCI, comprenant les informations relatives au service XR,
dans lequel un champ de bits du PUSCH comprend un champ d'indication de service et un champ d'informations relatives au service XR ; ou
dans lequel un champ de bits du CE MAC comprend un champ d'indication de service et un champ d'informations relatives au service XR ; ou
dans lequel un champ de bits des UCI comprend un champ d'indication de service et un champ d'informations relatives au service XR.

2. Procédé de traitement d'informations selon la revendication 1,
dans lequel la détermination des informations relatives au service XR comprend :
la détermination des informations relatives au service XR conformément à des statistiques de données historiques ; ou
la détermination des informations relatives au service XR par le biais d'une prédiction à l'aide d'un modèle cible,
ou
dans lequel les informations relatives au service XR comprennent au moins l'un parmi :
un paramètre de modèle de service de liaison montante ; ou
un paramètre de qualité de service, QoS, de service de liaison montante,
ou
dans lequel les informations relatives au tampon de lecture de l'UE comprennent au moins l'un parmi :
une valeur absolue d'une taille d'un tampon de lecture ;
une modification de la taille du tampon de lecture ; ou
une valeur moyenne statistique des retards des paquets de données arrivant à l'UE.

3. Procédé de rétroaction d'informations selon la revendication 2, dans lequel, lorsque les informations relatives au service XR comprennent le paramètre de modèle de service de liaison montante, le paramètre de modèle de service de liaison montante comprend au moins l'un parmi :
une valeur moyenne de tailles de paquets de données ;
une variation dans les tailles des paquets de données ;
une valeur maximale des tailles des paquets de données ;
une valeur minimale des tailles des paquets de données ;
une période d'arrivée des paquets de données ;
une valeur moyenne des retards de gigue de réseau de liaison montante ; ou
une variation des retards de gigue de réseau de liaison montante.

4. Procédé de rétroaction d'informations selon la revendication 2, dans lequel, lorsque les informations relatives au service XR comprennent le paramètre QoS de service de liaison montante, le paramètre QoS de service de liaison montante comprend au moins l'un parmi :
un budget de retard de paquet de données de service de liaison montante ; ou
la fiabilité des paquets de données de service de liaison montante.

5. Procédé de rétroaction d'informations selon la revendication 1, dans lequel l'obtention de la ressource de rétroaction pour les informations relatives au service XR comprend :
la détermination de la ressource de rétroaction conformément à un protocole ; ou
l'obtention de la ressource de rétroaction configurée par le dispositif de réseau.

6. Procédé de transmission d'informations selon la revendication 5, dans lequel l'obtention de la ressource de rétroaction configurée par le dispositif de réseau comprend :
la transmission d'informations de demande de configuration de ressources au dispositif de réseau, et la réception d'une première signalisation d'indication transmise par le dispositif de réseau conformément aux informations de demande de configuration de ressources, la première signalisation d'indication indiquant la ressource de rétroaction ; ou
la réception de la ressource de rétroaction préconfigurée par le dispositif de réseau par le biais d'une signalisation de couche supérieure.

7. Procédé selon la revendication 1, 5 ou 6, dans lequel les informations d'indication comprennent au moins l'un parmi :
une période de rétroaction ;
un décalage temporel de rétroaction ; ou
une ressource de rétroaction dans le domaine fréquentiel.

8. Procédé de rétroaction d'informations selon la revendication 7, dans lequel la transmission des informations relatives au service XR au dispositif de réseau par le biais de la ressource de rétroaction comprend :
la détermination d'une position dans le domaine temporel d'une occasion de rétroaction au cours de chaque période de rétroaction conformément à la période de rétroaction et au décalage temporel de rétroaction, et la transmission des informations relatives au service XR à l'occasion de rétroaction conformément à la position de domaine temporel ; et/ou
la détermination d'une position de domaine fréquentiel de rétroaction des informations relatives au service XR conformément à la ressource de rétroaction de domaine fréquentiel, et la transmission des informations relatives au service XR au niveau de la position de domaine fréquentiel de rétroaction.

9. Procédé de rétroaction d'informations selon la revendication 1, dans lequel l'obtention de la condition de rétroaction pour les informations relatives au service XR comprend :
le fait de déterminer que la condition de rétroaction est qu'une rétroaction est basée sur le déclenchement d'événement de rétroaction ; ou
l'obtention de la condition de rétroaction configurée par le dispositif de réseau.

10. Procédé de rétroaction d'informations selon la revendication 9, dans lequel l'obtention de la condition de rétroaction configurée par le dispositif de réseau comprend :
la réception d'informations de configuration de rétroaction et/ou d'une seconde signalisation d'indication transmises par le dispositif de réseau,
dans lequel les informations de configuration de rétroaction comprennent le déclenchement d'événement de rétroaction ;
la seconde signalisation d'indication comprend une signalisation d'indication de rétroaction ou une signalisation d'indication d'absence de rétroaction,
dans lequel la seconde signalisation d'indication comprend : une signalisation de couche 1 ou un élément de commande de commande d'accès au support, CE MAC.

11. Procédé de rétroaction d'informations, comprenant :
la réception (41), par un dispositif de réseau, d'informations relatives au service de réalité augmentée, XR, transmises par un équipement utilisateur, UE,
dans lequel les informations relatives au service XR comprennent des informations relatives au tampon de lecture de l'UE ;
dans lequel le dispositif de réseau reçoit les informations relatives au service XR par le biais de la ressource de rétroaction conformément à la condition de rétroaction ;
dans lequel la réception des informations relatives au service XR par le biais de la ressource de rétroaction comprend au moins l'un parmi :
lorsque la commande de ressources radio, RRC, est établie ou rétablie, la réception d'un canal partagé de liaison montante physique, PUSCH, par le biais de la ressource de rétroaction, le PUSCH transportant les informations relatives au service XR ;
la réception d'un CE MAC par le biais de la ressource de rétroaction, le CE MAC transportant les informations relatives au service XR ; ou
la réception d'un canal de commande de liaison montante physique, PUCCH, par le biais de la ressource de rétroaction, le PUCCH transportant des informations de commande de liaison montante, UCI, comprenant les informations relatives au service XR,
dans lequel un champ de bits du PUSCH comprend un champ d'indication de service et un champ d'informations relatives au service XR ; ou
dans lequel un champ de bits du CE MAC comprend un champ d'indication de service et un champ d'informations relatives au service XR ; ou
dans lequel un champ de bits des UCI comprend un champ d'indication de service et un champ d'informations relatives au service XR.

12. Dispositif de rétroaction d'informations (500), comprenant :
une première unité de détermination (510), configurée pour déterminer des informations relatives au service de réalité augmentée, XR, les informations relatives au service XR comprenant des informations relatives au tampon de lecture de l'équipement utilisateur, UE ; et
une première unité de transmission (520), configurée pour transmettre les informations relatives au service XR à un dispositif de réseau ;
dans lequel les informations relatives au service XR sont transmises au dispositif de réseau par le biais de la ressource de rétroaction conformément à la condition de rétroaction ;
dans lequel la transmission des informations relatives au service XR au dispositif de réseau par le biais de la ressource de rétroaction comprend au moins l'un parmi :
lorsque la commande de ressources radio, RRC, est établie ou rétablie, la transmission d'un canal partagé de liaison montante physique, PUSCH, par le biais de la ressource de rétroaction, le PUSCH transportant les informations relatives au service XR ;
la transmission d'un CE MAC par le biais de la ressource de rétroaction, le CE MAC transportant les informations relatives au service XR ; ou
la transmission d'un canal de commande de liaison montante physique, PUCCH, par le biais de la ressource de rétroaction, le PUCCH transportant des informations de commande de liaison montante, UCI, comprenant les informations relatives au service XR,
dans lequel un champ de bits du PUSCH comprend un champ d'indication de service et un champ d'informations relatives au service XR ; ou
dans lequel un champ de bits du CE MAC comprend un champ d'indication de service et un champ d'informations relatives au service XR ; ou
dans lequel un champ de bits des UCI comprend un champ d'indication de service et un champ d'informations relatives au service XR.

13. Dispositif de rétroaction d'informations (600), comprenant :
une première unité de réception (610), configurée pour recevoir des informations relatives au service de réalité augmentée (XR) transmises par un équipement utilisateur, UE,
dans lequel les informations relatives au service XR comprennent des informations relatives au tampon de lecture de l'UE ;
dans lequel les informations relatives au service XR sont reçues par le biais de la ressource de rétroaction conformément à la condition de rétroaction ;
dans lequel la réception des informations relatives au service XR par le biais de la ressource de rétroaction comprend au moins l'un parmi ;
lorsque la commande de ressources radio, RRC, est établie ou rétablie, la réception d'un canal partagé de liaison montante physique, PUSCH, par le biais de la ressource de rétroaction, le PUSCH transportant les informations relatives au service XR ;
la réception d'un CE MAC par le biais de la ressource de rétroaction, le CE MAC transportant les informations relatives au service XR ; ou
la réception d'un canal de commande de liaison montante physique, PUCCH, par le biais de la ressource de rétroaction, le PUCCH transportant des informations de commande de liaison montante, UCI, comprenant les informations relatives au service XR,
dans lequel un champ de bits du PUSCH comprend un champ d'indication de service et un champ d'informations relatives au service XR ; ou
dans lequel un champ de bits du CE MAC comprend un champ d'indication de service et un champ d'informations relatives au service XR ; ou
dans lequel un champ de bits des UCI comprend un champ d'indication de service et un champ d'informations relatives au service XR.
